(19) Europäisches Patentamt
European Patent Office
Office européen des brevets

(11) **EP 4 550 246 A1**

(12) **EUROPEAN PATENT APPLICATION**
published in accordance with Art. 153(4) EPC


(43) Date of publication:
**07.05.2025 Bulletin 2025/19**

(21) Application number: **23872129.4**

(22) Date of filing: **21.09.2023**

(51) International Patent Classification (IPC):
***G06Q 50/04*** *(2012.01)*

(52) Cooperative Patent Classification (CPC):
**G06Q 50/04**

(86) International application number:
**PCT/JP2023/034366**

(87) International publication number:
**WO 2024/070903 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.09.2022 JP 2022155593**



(71) Applicant: **JFE Steel Corporation**
**Tokyo 100-0011 (JP)**

(72) Inventors:
- **IGIMI Shinji**
  **Tokyo 100-0011 (JP)**
- **TERADA Kazuki**
  **Tokyo 100-0011 (JP)**
- **MATSUI Yutaka**
  **Tokyo 100-0011 (JP)**

(74) Representative: **Scott, Stephen John**
**YUJA IP LAW**
**4 Centenary House**
**The Avenue**
**York YO30 6AU (GB)**


(54) **CALCULATION METHOD, MANUFACTURING METHOD OF PRODUCT, MANAGEMENT METHOD OF PRODUCT, CALCULATION DEVICE, MANUFACTURING FACILITY OF PRODUCT, MEASUREMENT METHOD, MEASUREMENT SYSTEM, MEASUREMENT DEVICE, CREATION METHOD OF TEACHER DATA, TEACHER DATA, GENERATION METHOD OF MODEL, PROGRAM, AND STORAGE MEDIUM**


(57) A calculation method to be used in production or use of a product includes a step (S2) of calculating a feature value using one or more input values selected from a predetermined input value group and one or more first models, and a step (S3) of calculating a deviation amount, which is an amount of displacement from the first model for a predetermined input value from the input value group, using one or more input values selected from the input value group and one or more second models. The second model and the first model are machine learning models generated using one or more pieces of training data respectively selected from a predetermined training data group.


*FIG. 2*

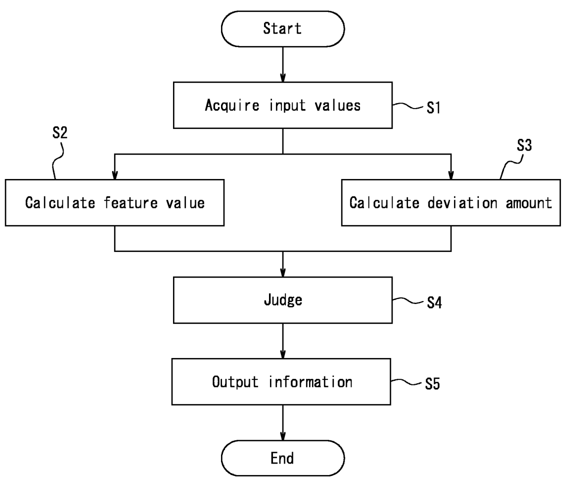


EP 4 550 246 A1

## Description

### TECHNICAL FIELD

The present disclosure relates to a calculation method, a method of producing a product, a method of managing a product, a calculation apparatus, a facility for producing a product, a measurement method, a measurement system, a measurement apparatus, a method of creating training data, training data, a method of generating a model, a program, and a storage medium.

### BACKGROUND

Attempts are being made to measure or evaluate a substance's mechanical properties or state of matter, which could not be determined directly in the past, via physical quantities that correlate with the substance's mechanical properties or state of matter. Such measurements or evaluations may, for example, use models based on machine learning.

For example, in the steel sector, steel products must satisfy mechanical property specifications required by users. Therefore, sampling inspections are conducted during the production process of steel products to ensure that the required mechanical properties are satisfied. The sampling inspection is a so-called destructive test in which a test area is cut out from a steel product and processed into a test piece to examine the mechanical properties. In recent years, however, demand has grown for quality assurance by directly measuring or evaluating the mechanical properties of the steel material products themselves in a nondestructive manner, rather than by sampling inspection.

Non-patent literature (NPL) 1 describes a method for evaluating the hardness, tensile strength, or yield stress of quenching on steel products using electromagnetic measurement, which is a nondestructive method, and machine learning or multiple regression. In NPL 1, a model for evaluating mechanical properties is constructed based on regression analysis between a plurality of different electromagnetic quantities, measured on steel products by an eddy current sensor or magnetic sensor, and mechanical property values. Using this model, the mechanical property values are evaluated based on the plurality of different electromagnetic quantities measured by the sensor.

Furthermore, methods to evaluate the mechanical properties of substances through machine learning are not limited to steel materials but are used in various fields. In Patent Literature (PTL) 1, for example, the thermal conductivity of a semiconductor crystal product is determined from a regression model generated in advance by machine learning, the surface temperature distribution of the measured material, and heating conditions. In PTL 2, for example, the condition of a road surface on which a car is traveling is determined from a naive Bayes estimator or neural network, which are machine learning, and a set of multi-point reflection intensity values obtained by laser light irradiation. In PTL 3, for example, the degradation state of a concrete surface is evaluated using machine learning and the surface strain state obtained from a surface strain image.

### CITATION LIST

#### Patent Literature

PTL 1: WO 2020/110796 A1
PTL 2: JP 2014-228300 A
PTL 3: JP 2021-018233 A


#### Non-patent Literature

NPL 1: Wolter Bernd et al, "Nondestructive Testing with 3MA-An Overview of Principles and Applications." Applied Sciences 2019, 9(6), 1068

### SUMMARY

#### (Technical Problem)

In the methods described in NPL 1 and PTL 1 to 3, the mechanical property values of an object are evaluated based on a model constructed in advance by regression analysis or machine learning from information measured by sensors. However, these methods have the problem that if there is no suitable machine learning model for the input values among the constructed model group, the output values will deviate significantly from the actual mechanical property values, and the reliability of the quality assurance for steel materials will decrease.

For example, in NPL 1, electromagnetic measurement is used to obtain electromagnetic quantities, but disturbance effects such as the metallic structure and scale on the steel sheet surface are not taken into account. The disturbance effects may cause the electromagnetic quantities to deviate from the machine learning model, and predicted values that deviate significantly from actual hardness values may be outputted. In addition, since PTL 1 does not consider the material properties of the sample to be evaluated when generating the model, incorrect predicted values might be outputted in the case of evaluating a sample with different material properties than the sample used when generating the machine learning model. PTL 2 does not accurately predict road surface conditions when measuring road surfaces composed of unlearned substances, especially substances with reflectance different from that of the training data. PTL 3 also has the same problem as PTL 2.

Thus, while methods for evaluating the mechanical properties of substances by machine learning have been used in various fields, the question of whether the machine learning models in use are appropriate for the input values has not been examined. Stating that the machine learning model is appropriate for the input values unit that when a predicted value of a feature value is obtained using the machine learning model for certain input values, the model does not output a predicted value that deviates significantly from the actual feature value.

The present disclosure has been conceived with the above points in mind. It is an aim of the present disclosure to provide a calculation method, a method of producing a product, a method of managing a product, a calculation apparatus, a facility for producing a product, a measurement method, a measurement system, a measurement apparatus, a method of creating training data, training data, a method of generating a model, a program, and a storage medium for outputting a feature value calculated by a machine learning model from one or more input values selected from a predetermined input value group, and in parallel, calculating whether the applied machine learning model is appropriate for input values selected in advance from the same input value group.

(Solution to Problem)

(1) A calculation method according to an embodiment of the present disclosure is
a calculation method to be used in production or use of a product, the calculation method including:

a feature value calculation step of calculating a feature value using one or more input values selected from a predetermined input value group and one or more first models; and
a deviation amount calculation step of calculating a deviation amount, which is an amount of displacement from the first model for a predetermined input value from the input value group, using one or more input values selected from the input value group and one or more second models, wherein
the second model and the first model are machine learning models generated using one or more pieces of training data respectively selected from a predetermined training data group.

(2) As an embodiment of the present disclosure, (1) further includes
a judgment step of comparing the deviation amount with a preset threshold and judging pass/fail of the first model being used or a grade of the deviation amount.
(3) A method of producing a product according to an embodiment of the present disclosure includes:

a production step of producing a product, wherein
in the production step, the calculation method of (1) or (2) is performed.

(4) A method of managing a product according to an embodiment of the present disclosure includes:

a production step of producing a product and performing the calculation method of (1) or (2); and
a management step of classifying the product based on at least one of the feature value and a deviation amount.

(5) A calculation apparatus according to an embodiment of the present disclosure is
a calculation apparatus to be used in production or use of a product, the calculation apparatus including:

feature value calculation unit configured to calculate a feature value using one or more input values selected from a predetermined input value group and one or more first models; and
deviation amount calculation unit configured to calculate a deviation amount, which is an amount of displacement from the first model for a predetermined input value from the input value group, using one or more input values selected from the input value group and one or more second models, wherein
the second model and the first model are machine learning models generated using one or more pieces of training data respectively selected from a predetermined training data group.

(6) As an embodiment of the present disclosure, (5) further includes
judgment unit configured to compare the deviation amount with a preset threshold and judging pass/fail of the first model being used or a grade of the deviation amount.
(7) As an embodiment of the present disclosure, (5) or (6) further includes
a data acquisition unit configured to obtain one or two among input values of the first model and a signal measured to obtain input values of the first model.
(8) A facility for producing a product according to an embodiment of the present disclosure includes:

a production facility configured to produce a product; and
the calculation apparatus of any one of (5) to (7).

(9) A measurement method according to an embodiment of the present disclosure includes:

a measurement step of measuring a signal related to a physical quantity of an object to be measured, wherein
the calculation method of (1) or (2) is performed, taking the physical quantity obtained from the measured signal as the one or more input values, and the feature value calculated in the feature value calculation step as a measurement value.

(10) A method of producing a product according to an embodiment of the present disclosure includes:

a production step of producing a product, wherein
the production step includes the measurement method of (9).

(11) A method of managing a product according to an embodiment of the present disclosure includes:

a production step of producing a product, the production step including the measurement method of (9); and
a management step of classifying the product based on at least one of the feature value and the deviation amount of the produced product.

(12) A measurement system according to an embodiment of the present disclosure includes:

a physical quantity measurement unit configured to measure a signal related to a physical quantity of an object to be measured; and
the calculation apparatus of (5) or (6), which takes the physical quantity obtained from the measured signal as the one or more input values, and the feature value calculated by the feature value calculation unit as a measurement value.

(13) A facility for producing a product according to an embodiment of the present disclosure includes:

a production facility configured to produce a product; and
the measurement system of (12).

(14) A measurement apparatus according to an embodiment of the present disclosure includes:

a data output unit;
a physical quantity measurement unit configured to measure a signal related to a physical quantity of an object to be measured; and
a controller for a physical quantity acquisition unit, the controller configured to execute a process of outputting the measured signal to an external calculation apparatus to obtain one or more input values, wherein
the calculation apparatus includes

feature value calculation unit configured to calculate a feature value using one or more input values and one or more first models; and

deviation amount calculation unit configured to calculate a deviation amount, which is an amount of displacement from the first model for the input value, using one or more input values selected from the input values and one or more second models.

(15) As an embodiment of the present disclosure, (14) further includes

a physical quantity calculator configured to calculate the physical quantity as the measured physical quantity from the measured signal, wherein
the controller for the physical quantity acquisition unit is configured to execute a process of outputting the measured physical quantity as the one or more input values instead of the measured signal to obtain the one or more input values.

(16) As an embodiment of the present disclosure, in (14) or (15),
the controller for the physical quantity acquisition unit is configured to execute a process of obtaining at least one of information about the calculated feature value and information about the calculated deviation amount from the calculation apparatus.
(17) A method of creating training data according to an embodiment of the present disclosure includes:

selecting, as actual input values, a predetermined number or more of input values judged as fail or for which the grade of the deviation amount is judged to be equal or worse than a predetermined reference from the pass/fail or the grade of the deviation amount of the first model calculated by the calculation method of (2);
assigning, to the selected actual input values,

a feature value actually measured as an actual output value, and
a label indicating the fail or that the grade of the deviation amount is equal or worse than the predetermined reference; and

designating as training data for generating the first model.

(18) Training data according to an embodiment of the present disclosure is
training data for generating a first model, the training data including:

a predetermined number or more of actual input values of the first model; and
for each actual input value,

a feature value actually measured as an actual output value, and
a label assigned from the pass/fail or the grade of the deviation amount of the first model calculated by the calculation method of (2), the label indicating the fail or that the grade of the deviation amount is equal or worse than a predetermined reference.

(19) A method of generating a model according to an embodiment of the present disclosure includes:

by using the training data of (18),
generating, by machine learning, a learned model having one or more input values selected from a predetermined input value group, and having, as an output value, a feature value with a correlation that can be derived from the input values.

(20) A program according to an embodiment of the present disclosure is

a program for a calculation apparatus to be used on the calculation apparatus of any one of (5) to (7),
the program being configured to cause a computer to perform functions of the feature value calculation unit and the deviation amount calculation unit.

(21) A storage medium according to an embodiment of the present disclosure is

a storage medium storing a program to be used on the calculation apparatus of any one of (5) to (7),
the storage medium storing a calculation apparatus program configured to cause a computer to perform functions of the feature value calculation unit and the deviation amount calculation unit.

(22) A program according to an embodiment of the present disclosure is

a program to be used on the measurement apparatus of any one of (14) to (16),
the program being configured to cause a computer to perform functions of the calculation apparatus and the data output unit.

(23) A storage medium according to an embodiment of the present disclosure is

a storage medium storing a program to be used on the measurement apparatus of any one of (14) to (16),
the storage medium storing a program configured to cause a computer to perform functions of the calculation apparatus and the data output unit.

(Advantageous Effect)

The calculation method, the method of producing a product, the method of managing a product, the calculation apparatus, the facility for producing a product, the measurement method, the measurement system, the measurement apparatus, the method of creating training data, the training data, the method of generating a model, the program, and the storage medium according to an embodiment of the preset disclosure can calculate a feature value using one or more input values selected from a predetermined input value group and a machine learning model, and in parallel, calculate whether the applied machine learning model is appropriate for predetermined input values from the input value group.

BRIEF DESCRIPTION OF THE DRAWINGS

In the accompanying drawings:

FIG. 1 is a block diagram illustrating a schematic configuration of a measurement system including a calculation apparatus according to an embodiment of the present disclosure;

FIG. 2 is an overall processing flow diagram;

FIG. 3 is a block diagram of a physical quantity measurement unit;

FIG. 4 is a diagram illustrating a specific configuration of a sensor;

FIG. 5 is a diagram illustrating an example of a signal given to an excitation coil to generate an alternating magnetic field;

FIG. 6 is a flow diagram for generating a first model;

FIG. 7 is a flow diagram for calculating a feature value;

FIG. 8 is a flow diagram for generating a second model;

FIG. 9 is a flow diagram for calculating a deviation amount;

FIG. 10 is a flow diagram for explaining a judgment process;

FIG. 11A is a diagram illustrating an example of a color map;

FIG. 11B is a diagram illustrating an example of a color map;

FIG. 11C is a diagram illustrating an example of a color map;

FIG. 12 is a diagram illustrating an example of a chart;

FIG. 13 is a block diagram illustrating another example configuration of a measurement system;

FIG. 14 is a block diagram illustrating another example configuration of a measurement system;

FIG. 15 is a block diagram illustrating another example configuration of a measurement system;

FIG. 16A is a diagram illustrating the relationship between an input value and a feature value to be measured;

FIG. 16B is a diagram illustrating the relationship with the feature value in the case of combining input values;

FIG. 17 is a flow diagram of judgment using a grade of a deviation amount;

FIG. 18 is a diagram illustrating an example of locations at which a difference of 20 HV or more occurred on a normal plate;

FIG. 19 is a diagram illustrating an example of locations at which a difference of 20 HV or more occurred on an abnormal plate; and

FIG. 20 is a block diagram illustrating another example configuration of a measurement system.

## DETAILED DESCRIPTION

A calculation method, a method of producing a product, a method of managing a product, a calculation apparatus, a facility for producing a product, a measurement method, a measurement system, a measurement apparatus, a method of creating training data, training data, a method of generating a model, a program, and a storage medium according to embodiments of the present disclosure are described below with reference to the drawings. In each drawing, identical or equivalent parts are marked with the same symbol. A description of identical or equivalent parts will be omitted or simplified as appropriate.

### [First embodiment]

#### (System configuration)

FIG. 1 is a block diagram illustrating a schematic configuration of a measurement system 20 including a calculation apparatus 12 according to an embodiment of the present disclosure. The calculation apparatus 12 according to the present embodiment is provided with a display 1, a controller 3, and a storage unit 9. In addition, a physical quantity acquisition unit 2 and a scanning unit 25 are provided for configuration as the measurement system 20. The present embodiment is suitable in the case of measuring an entire plate by moving the apparatus that includes the controller 3 by hand, such as by a trolley. As described in detail below, a sensor 14, a power supply, and the calculation apparatus 12 are moved manually with the trolley (scanning unit 25), signals are received by the sensor 14, and the controller 3 of the calculation apparatus 12 obtains physical quantities from the result of signal receipt, estimates a feature value, and estimates a deviation amount.

The display 1 displays information selected as appropriate by the controller 3 among the information on the physical quantities, feature value, and deviation amount calculated by the controller 3. In the present embodiment, the display 1 displays at least one of the chart and the map described below, which are generated by the controller 3. The display 1 may be configured by a display capable of displaying text, images, and the like. The display may be a display device such as a liquid crystal display (LCD) or an organic electroluminescence display (OELD).

The physical quantity acquisition unit 2 is provided with a physical quantity measurement unit 2a that measures a physical quantity of the object to be measured. Specific examples of the physical quantity measurement unit 2a are described below.

Here, the measurement by the physical quantity measurement unit 2a is performed to measure a feature value of a product and use the feature value to evaluate physical characteristics, quality, and the like. The physical quantities are objectively measurable quantities, such as temperature, mass, and electromagnetic quantities. Of course, a combination of these may be used. The physical quantities are not limited to being specific physical quantities, as long as they have a correlation that makes it possible to derive the feature value by some method. In the present embodiment, for the measurement system 20, the feature value is a value related to the measurement result for a product. In order to nondestructively measure the feature value of a product and use the feature value to evaluate physical characteristics, quality, and the like of the product, measurement is assumed to be made by the physical quantity measurement unit 2a. More specifically, the feature value is a mechanical property including hardness, for example, but is not limited to this example. Here, the "product" includes not only the completed "final product" but also the state referred to as "intermediate product" or "semi-finished product" obtained during production of the final product. In addition, the "substance" is "one type of product". As an example of a method of calculating a mechanical property of a substance (one type of product) by machine learning, the surface layer hardness of steel material in a steel process is described as a feature value, but examples of application of the present method are not limited to this example. In the present embodiment, the physical quantity is an electromagnetic quantity, but it suffices to be able to model, convert to a function, or quantify the relationship between the feature value to be determined and the physical quantities that are the input values. Other examples include temperature information and optical information via laser irradiation or the like.

The controller 3 calculates a feature value using one or more first models, taking the measured physical quantity as one or more input values. The controller 3 calculates a deviation amount, which is an amount of displacement from the first model for the input value, using one or more input values selected from the input values and one or more second models. The controller 3 also compares the deviation amount with a preset threshold and judges pass/fail of the first model being used or a grade of the deviation amount. Details on calculation of the feature value, calculation of the deviation amount, and the judgments are described below.

In the present embodiment, the controller 3 includes a classification processor 4 for the first model, a classification processor 5 for the second model, feature value calculation unit 6, deviation amount calculation unit 7, and judgment unit 8. The classification processor 4 for the first model and the classification processor 5 for the second model classify the input values and perform a process to select the appropriate first model and second model, respectively. The feature value calculation unit 6 executes a process of calculating the feature value. The deviation amount calculation unit 7 executes a process of calculating the deviation amount. The judgment unit 8 also makes a judgment of pass/fail or the grade of the deviation amount of the first model applied to the input values.

Furthermore, the judgment unit 8 generates information about the feature value from the calculated feature value to enable output to the display 1. The judgment unit 8 also generates information about the deviation amount from the calculated deviation amount or the judgment results. Furthermore, the judgment unit 8 outputs these generated pieces of information to the display 1, either in a predetermined format or according to a selection made as necessary.

When the measurement system 20 is configured as illustrated in the first embodiment, the controller 3 may be provided with a function to control the physical quantity acquisition unit 2. The controller 3 functions as a physical quantity calculator 29a, which extracts physical quantities from a signal obtained by a physical quantity measurement unit 2a, described below, according to a predetermined method. The controller 3 also controls the physical quantity measurement unit 2a to generate and obtain a signal that enables extraction of the physical quantity.

The controller 3 is configured to include one or more processors. The processor can, for example, be a general-purpose processor or a dedicated processor specialized for particular processing, but the processor is not limited to these examples and may be any processor. The controller 3 controls the entire operations of the calculation apparatus 12, not only the aforementioned processing. The controller 3 functions as the classification processor 4 for the first model, the classification processor 5 for the second model, the feature value calculation unit 6, the deviation amount calculation unit 7, and the judgment unit 8 according to programs read from the storage unit 9 or an accessible storage apparatus. Furthermore, when the measurement system 20 is configured as in the first embodiment, the controller 3 may function as the controller 3 that includes the physical quantity calculator 29a according to a program read from the storage unit 9 or an accessible storage apparatus. The controller 3 may also be able to perform other functions required of the calculation apparatus 12.

The storage unit 9 stores data used by the controller 3. The storage unit 9 may store programs. The storage unit 9 includes at least a first model group 10 and a second model group 11. The first model group 10 is a plurality of first models (first model _1 to first model _n in FIG. 1) in the present embodiment, where n may be not only two or more but also one. The second model group 11 is a plurality of second models (second model _1 to second model _k in FIG. 1) in the present embodiment, where k may be not only two or more but also one. The number of first models, n, and the number of second models, k, may be the same or different. First models can be added later to the first model group 10. Second models can be added later to the second model group 11.

Furthermore, the storage unit 9 can also store one or more type of the following in the present embodiment: a measured physical quantity group 26, a calculated feature value group 27, or a calculated deviation amount group 28. The measured physical quantity group 26 indicates a group of one or more physical quantities measured by the physical quantity acquisition unit 2 and the controller 3. The physical quantities selected from this measured physical quantity group 26 become one or more input values for the first model and the second model. Next, the calculated feature value group 27 indicates a group of one or more feature values calculated by the feature value calculation unit 6. Finally, the calculated deviation amount group 28 indicates a group of one or more deviation amounts calculated by the deviation amount calculation unit 7.

The storage unit 9 includes one or more memories. The memories can be any memory, including but not limited to a semiconductor memory, a magnetic memory, or an optical memory. The storage unit 9 is built into the calculation apparatus 12, for example, but can also be configured to be accessed by the controller 3 via any unit.

The scanning unit 25 is a mechanism for moving the calculation apparatus 12 and the physical quantity acquisition unit 2. In the case of FIG. 1, the calculation apparatus 12 and the physical quantity acquisition unit 2 can be mounted and moved. For example, a cart moved manually or by non-human power can be used.

In the present embodiment, the combination of the calculation apparatus 12 and the physical quantity acquisition unit 2, which is the measurement apparatus, functions as a stand-alone measurement system 20. Furthermore, by combining the scanning unit 25, the calculation apparatus 12, and the physical quantity acquisition unit 2, the system can function as a stand-alone movable measurement system 20. The calculation apparatus 12 may, however, have any configuration. For example, in the present embodiment, the calculation apparatus 12 is configured by a single apparatus including a processor, such as a computer, but may be configured by a plurality of computers or the like that are connected by a network and can transmit and receive data and the like. As an example, as illustrated in FIG. 1, the measurement system 20 may be configured by the physical quantity acquisition unit 2 being connected electrically, physically, or via a network to the calculation apparatus 12, which includes the controller 3 and the storage unit 9. The configurations illustrated in FIG. 1 and in FIGS. 13 to 15 below are not limiting, and the calculation apparatus 12 may be configured with a portion of the display 1, the controller 3, and the storage unit 9 included in one computer and the rest in a different computer. For example, the storage unit 9 may be in a separate computer connected by a network to the computer including the controller 3. The processing performed by the calculation apparatus 12 may be performed as distributed processing across a plurality of computers. In this case, the functions of the controller 3 may be realized by the processors in the plurality of computers working together. For example, the judgment process executed by the judgment unit 8 may be executed on a different computer from the computer that performs the calculation processes executed by the feature value calculation unit 6 and the deviation amount calculation unit 7.

In the following description, the network connection can be wired, wireless, or a mixture of the two. The network connection may also use part of a global information and telecommunication network such as the Internet. The connection can be selected and used as appropriate.

(Overall processing)

FIG. 2 is a diagram of the overall processing flow executed by the calculation apparatus 12. The overall processing flow diagram illustrates an overview of the processing, and the details of each process are described below. The controller 3 executes an acquisition step of obtaining input values (step S1). The controller 3 executes a feature value calculation step of calculating a feature value (step S2). The controller 3 executes a deviation amount calculation step of calculating a deviation amount (step S3). Here, the feature value calculation step and the deviation amount calculation step may be executed in parallel, as in the present embodiment, or in sequence. In the case of execution in sequence, it does not matter which step is executed first, the feature value calculation step or the deviation amount calculation step. The controller 3 executes a judgment step of determining pass/fail of the first model or the grade of the deviation amount (step S4). The controller 3 executes a display step of outputting, and displaying on the display 1, information selected from among information on each of the aforementioned physical quantities, feature value, and deviation amount (step S5). In the present embodiment, the controller 3 outputs, to the display 1, at least one of a chart and a map that display the feature value and the deviation amount in overlap or side-by-side. Details related to each of these steps are described below.

(Input value in acquisition step)

The physical quantity measurement unit 2a measures signals related to physical quantities, which are input values obtained by the controller 3. In the present embodiment, the physical quantities are a plurality of types of electromagnetic quantities. In the present embodiment, signals related to physical quantities are signals of the change in electromagnetic quantities as obtained from the physical quantity measurement unit 2a. FIG. 3 is a block diagram of the physical quantity measurement unit 2a. The physical quantity measurement unit 2a is provided with a signal transmitting and receiving unit 13 and a sensor 14. The sensor 14 measures a signal related to a physical quantity of the object to be measured. The controller 3 then calculates, as the physical quantity, the electromagnetic quantity that becomes the input value or effective input value from the signal related to the measured physical quantity.

In a case in which electromagnetic quantities are considered the physical quantities, the electromagnetic quantities obtained from one BH curve measured by a certain excitation voltage or excitation current correspond to a predetermined input value group. The one measured BH curve is subjected to incremental magnetic permeability analysis, higher-order harmonic analysis, and eddy current impedance analysis to calculate the electromagnetic quantities. The types of electromagnetic quantity to be calculated include, for example, the maximum and minimum values of the incremental magnetic permeability, the maximum and minimum values of the impedance, and the amplitude of the magnetizing voltage.

Here, an example of a "predetermined input value group" is preferably a group of feature values obtained upon each measurement at the time of measuring one or more feature values required to output one feature value from the first model. The feature values included in the group of feature values should be feature values observed to interact with the feature value to be outputted. For example, in the aforementioned example, an electromagnetic quantity group obtained from one BH curve is necessary to output one type of hardness in the first model, and this electromagnetic quantity group obtained from one BH curve corresponds to the "predetermined input value group". In this case, the one BH curve is measured at a predetermined single time (referred to as the same time). In a case in which one feature value is outputted using the first model based on a plurality of physical quantities measured at the same time, the plurality of physical quantities measured at the same time corresponds to the "predetermined input value group". Therefore, the plurality of physical quantities measured at the same time most preferably are the "predetermined input value group". Here, most of the measurements require a certain amount of time (time range). Therefore, the "same time" need not be strictly simultaneous but rather may be a certain time range required to measure the one BH curve.

In the present embodiment, the object to be measured has a substance 16 and a film 15 formed on the surface of the substance 16.

For example, if the substance 16 is a steel material, an iron oxide film called scale or black skin is formed on the surface of the steel material during the production of the steel material. Various types of iron oxide films exist, but generally magnetite (triiron tetroxide, $Fe_3O_4$), wustite (ferrous oxide, FeO), and hematite (red iron ore, $Fe_2O_3$) are known. Each of these scales has not only a different composition of oxygen and iron, but also different electromagnetic characteristics. For example, magnetite is magnetic, whereas wustite is not. Here, to measure the mechanical properties of the steel substance 16 (especially of the surface layer), the physical quantities are measured from the surface. In other words, the physical quantities are measured taking the steel substance 16 and scale, which is the film 15, together as the object to be measured.

Therefore, the film 15, which is scale, affects the measurement of the steel substance 16. The type and composition of the scale varies depending on the condition of the steel material at the time of production. Furthermore, the steel material itself may exhibit anisotropy in magnetism due to the microstructure, and the electromagnetic characteristics vary depending on the object to be measured. Therefore, as described below, an appropriate first model is selected from the first model group 10, and the selected first model is used to estimate a mechanical property of the substance 16, i.e., a feature value. In general, the estimated feature value (mechanical property) is treated as a non-destructive measurement result from the measurement system 20 using the first model.

FIG. 4 is a diagram illustrating one specific configuration of the sensor 14. The sensor 14 may be a magnetic sensor, for example, provided with an excitation coil 17 and a magnetizing yoke 18. The sensor 14 applies an alternating magnetic field to the object to be measured while moving relative to the object to be measured. In the sensor 14 illustrated in FIG. 4, one coil is used as both the excitation coil and the coil that measures electromagnetic changes. The sensor 14 measures the effect of eddy current and the like, induced in the object to be measured by the alternating magnetic field, as a change in electromagnetic quantity. As another example, a sensor for measuring electromagnetic quantities may be configured by having an excitation coil wound around a magnetizing yoke and a separately wound coil for receiving signals with the excitation coil. As yet another example, a sensor for measuring electromagnetic quantities can be configured by excitation coils wound around magnetizing yokes and a coil for measuring electromagnetic changes installed independently between the magnetizing yokes. The sensor for measuring electromagnetic quantities is not limited to the configuration illustrated in FIG. 4, as long as the sensor is configured to be provided with an excitation coil, a coil for measuring electromagnetic changes, and a magnetizing yoke.

The signal transmitting and receiving unit 13 is a signal application unit that is connected to the excitation coil 17 of this sensor 14 for applying a signal to generate an alternating magnetic field in the object to be measured. The signal applied to the excitation coil 17 can be either current or voltage. The manager can choose whichever is necessary as appropriate. Control of the application, such as signal on/off timing or signal strength, is performed by the controller 3.

On the other hand, the received signal from the coil that measures the electromagnetic changes is obtained by using the excitation coil 17 and the signal transmitting and receiving unit 13 connected to the excitation coil 17. Specifically, the signal received by the excitation coil 17 is filtered and then transmitted to the controller 3 via the connection between the physical quantity acquisition unit 2 and the calculation apparatus 12. A controller 2c for the physical quantity acquisition object in the controller 3 processes the received signal and extracts the physical quantities. The extracted physical quantities are stored as measured physical quantities in a predetermined area of the storage unit 9. The stored physical quantities are subsequently used as input values for the first model or second model, or as actual input values for training data to generate these models, as needed.

FIG. 5 is a diagram illustrating an example of a signal given to the excitation coil 17 to generate an alternating magnetic field. The signal in FIG. 5 is a signal yielded by superimposing a high-frequency signal on a low-frequency signal. By using such a signal, the sensor 14 can efficiently measure electromagnetic quantities based on low-frequency signals and electromagnetic quantities based on high-frequency signals. Many types of electromagnetic quantities can therefore be measured. The low-frequency signal is, for example, a 150 Hz sine wave. The high-frequency signal is, for example, a 1 kHz sine wave. The superposition of high-frequency and low-frequency signals facilitates the measurement of electromagnetic quantities up to the surface layer of the substance 16, even when the film 15 is formed on the substance 16. Here, magnetism can easily permeate if the film 15 is thin or if the relative magnetic permeability (ratio of the magnetic permeability of the substance to the magnetic permeability of a vacuum) of the film 15 is low, for example. The electromagnetic quantities may be measured using only appropriate high frequencies when magnetism is highly permeable. Magnetism does not permeate easily, making it difficult for the signal to reach the substance 16, if the film 15 is thick or if the relative magnetic permeability of the substance configuring the film 15 is high, for example. When magnetism does not permeate easily, superimposition of a high-frequency signal on a low-frequency signal enables the magnetism to penetrate deeper. In this case, the low-frequency signal can be a direct current signal. As another example, the low-frequency signal can be a sinusoidal signal or a rectangular signal.

(Generation of first model)

FIG. 6 illustrates an example flow diagram for generating the first model. The process of generating the first model is performed using training data having actual input values and actual output values prior to the execution of the feature value calculation step, so that the first model group 10 is already stored in the storage unit 9 at the time of execution of the feature value calculation step. In the present disclosure, the training data is one or more pieces of training data selected from a predetermined training data group, and the training data group is also used to generate the second model described below. In the present embodiment, the controller 3 of the calculation apparatus 12 generates the first model, but another apparatus or processor with access to the storage unit 9 may execute the process of generating the first model and store the generated first model group 10 in the storage unit 9.

First, an evaluation point to be measured on the steel material surface is set (step S11). Next, measurements using the physical quantity measurement unit 2a in FIG. 3 and the controller 3 in FIG. 1 are made at that evaluation point to obtain the input values of one or more electromagnetic quantities (step S12). At this time, the object to be measured is steel material with scale on the surface layer. In other words, steel material corresponds to the substance 16, and scale corresponds to the film 15. Pre-processing is subsequently performed at the measured point (step S13), and the surface layer hardness of the steel material, which is a feature value (mechanical property), is actually measured (step S14). Here, the pre-processing is the process of removing the film 15, which is scale. In step S14, the surface layer hardness of the steel material is measured destructively. The surface layer hardness of the steel material may be obtained using any measurement method, including known techniques. Highly reliable, valid measurement methods include indentation testing and dynamic hardness testing, for example. A micro-Vickers hardness test for indentation testing and a rebound hardness test for dynamic hardness testing are particularly preferable, because these tests can accurately measure local hardness. The process from step S11 to step S14 is performed again until enough training data is collected (No in step S15). Once a predetermined number or more of pieces of training data have been collected and collection is complete (Yes in step S15), a first model is generated using the obtained electromagnetic quantities (actual input values) and steel surface hardness (actual output values) as training data (step S16). In the present embodiment, a plurality of first models is generated as the first model group 10. In the present embodiment, the first model was generated by machine learning of a generalized linear model (GLM), but the machine learning is not limited to this method.

Here, the state in which a predetermined number or more of pieces of training data have been collected and the collection is complete (Yes in step S15) corresponds to the "predetermined training data group". The actual input values of the training data have the same acquisition conditions as "one or more input values selected from the predetermined input value group", described below. The actual input values and the input values may or may not be selected from the same input value group.

Furthermore, the first model is generated in step S16 following the completion of the collection of the obtained electromagnetic quantities (actual input values) and steel surface hardness (actual output values) (Yes in step S15) in the present embodiment, but this configuration is not limiting. For example, a configuration may be adopted to prepare only the training data in advance by steps S11 through S15, and then at a later date to perform only step S16 to generate the first model using the training data prepared in advance.

To collect the training data, a different physical quantity measurement unit 2a and controller 3 may be used than the physical quantity measurement unit 2a and controller 3 used when measuring the substance 16 during production while the substance 16 has the film 15. The other physical quantity measurement unit 2a and controller 3 most preferably have the same structure as the physical quantity measurement unit 2a and controller 3 used for measurement during production, as this increases the accuracy of the first model.

(Calculation of feature value)

FIG. 7 illustrates a flow diagram for calculating a feature value. The feature value is calculated using the first model generated in the flow illustrated in FIG. 6. First, the surface layer of the steel material that has scale on the surface layer is the object to be measured, and measurements are made at the surface layer with the scale, i.e., the film 15, in place using the physical quantity measurement unit 2a in FIG. 3 and the controller 3 in FIG. 1. One or more input values, which are electromagnetic quantities, are obtained. At this time, the step of measuring the physical quantities of the object to be measured, which has the substance 16 and the film 15 on the surface of the substance 16, using the physical quantity measurement unit 2a and the controller 3 in FIG. 1 corresponds to the measurement step. In the present embodiment, the measurement method performed by the measurement system 20 also includes the measurement step.

The classification processor 4 for the first model subsequently selects the appropriate first model for the object to be measured from the first model group 10 based on the obtained input values (step S21). In other words, the classification processor 4 for the first model selects the appropriate first model for the difference in the scale coating weight and microstructure of the surface of the object to be measured. The classification processor 4 for the first model uses, for example, the selection method described in WO 2021/256442 A1 (hereinafter referred to as the Reference). Specifically, a support vector machine (SVM), which is a type of machine learning used primarily for classification problems, is used. SVMs are characterized by high discrimination accuracy even if the data dimensions are large, low risk of over-training, and a small number of hyperparameters that need to be optimized. Therefore, SVMs are suitable for handling a plurality (i.e., multidimensional) physical quantities (such as electromagnetic quantities), as in the present embodiment. It suffices to select the explanatory variables used in selecting the first model in the classification processor 4 for the first model appropriately based on the relationship between the input values and output values. In the case of the present embodiment, one or more electromagnetic quantities as input values are used.

Here, FIGS. 16A and 16B are used to illustrate the difficulty of simply associating and measuring a feature value of the object to be measured from a plurality of input values. FIG. 16A illustrates the relationship between a certain input value "as" and a feature value of the object to be measured (for example, the surface layer hardness). In a case in which it is possible to construct one mathematical model (e.g., model As) that links any one input value as (for example, one piece of electromagnetic information) to a feature value to be measured in a one-to-one relationship, the feature value (for example, surface layer hardness) can be calculated from the input value as using that model. However, in a case in which the object to be measured is a steel material, for example, other factors are involved, such as differences in the actual metallic structure and the formation of a scale layer on the surface layer. Therefore, as illustrated in FIG. 16A, a plurality of correlations exist between any one input value as and a feature value, depending on the combination of the metallic structure and scale thickness. In FIG. 16A, the relationship is illustrated for model Bs in addition to model As. Therefore, as illustrated in FIG. 16A, two different hardnesses might be calculated even if the measured value of the input value as is the same. This reduces the accuracy of feature calculation. Here, by selecting an appropriate model, a reduction in the calculation accuracy of the feature value can be avoided. However, if there is a plurality of models that output similar mechanical properties for a given value of the input value as, for example, these models could be recognized as one model. To address this problem, each model can be recognized separately by using a plurality of parameters, as illustrated in FIG. 16B. In the example in FIG. 16B, model As and model Bs are recognized separately by using a combination of input value as and input value bs. By use of a plurality of input values in this manner, the data group for each model can be determined. Then, by selection and use of the appropriate model from the plurality of determined models, the mechanical feature value can be measured or evaluated with high accuracy. In the present embodiment, a classifier was used when determining the data group for each model with use of a plurality input values.

In the present embodiment, the classification processor 4 for the first model uses a support vector machine (SVM), which a type of machine learning used for classification and regression problems, as the method of selecting the first model, but this configuration is not limiting. The number of selected first models is not limited to one. In other words, the classification processor 4 for the first model may select one or more first models. Also, the classification processor 4 for the first model may select the first model determined to be the most appropriate among one or more first model groups 10. In this case, it is expected that the difference between the calculated feature value and the actual measured value will be the smallest, which is most preferable. The results of the above selection of the first model may be stored by the classification processor 4 for the first model in a specific area of the storage unit 9. With this configuration, information about which first model was selected can also be used outside of the feature value calculation unit 6.

The feature value calculation unit 6 calculates a feature value using one or more input values and the one or more selected first models (step S22). In the present embodiment, the feature value calculation unit 6 can obtain the surface layer hardness, which is the feature value to be calculated, as an output value by inputting electromagnetic quantities as input values to the appropriate first model that was selected.

The feature value calculation unit 6 stores the calculated feature value in the storage unit 9 as the calculated feature value (step S23). Here, the feature value calculated by the feature value calculation unit 6 is the measured value of the feature value by the measurement system 20. For example, in a case in which the feature value is the steel material surface layer hardness, the value calculated by the feature value calculation unit 6 is treated as the measured value of the steel material surface layer hardness. The feature value group 27 stored in the storage unit is read from the storage unit 9 by the judgment unit 8 in step S4 and used in the judgment process described below.

(First generation of second model)

FIG. 8 illustrates a flow diagram for generating the second model. The process of generating the second model is performed using one or more pieces of training data selected from a predetermined training data group prior to the execution of the deviation amount calculation step, so that the second model group 11 is already stored in the storage unit 9 at the time of execution of the deviation amount calculation step. In the present embodiment, the controller 3 of the calculation apparatus 12 generates the second model, but another apparatus or processor with access to the storage unit 9 may execute the process of generating the second model and store the generated second model group 11 in the storage unit 9.

The second model enables evaluation of the relationship between input values (electromagnetic quantities in the present embodiment) included in a predetermined input value group (electromagnetic quantity group in the present embodiment). In generating the second model, training data selected from the same training data group used in the process of generating the first model is used. Therefore, the second model enables evaluation of the difference in the relationships among the input values when the first model is generated. The deviation amount is the amount of displacement from the first model and represents this difference in the relationships among the input values. Therefore, if the deviation amount is large, the amount of displacement from the first model is large, and therefore the feature value inferred using that first model may deviate significantly from the actually measured value. Conversely, if the deviation amount is small, it can be judged that the first model is being used to accurately infer the feature value. Here, each of the second models can be associated with a particular first model based on the commonality of the training data. The deviation amount can be obtained for each input value.

In a case in which the first model selection process S21 by the classification processor 4 for the first model is included, as in the present embodiment, one of the first models is always selected for the physical quantity (input value) of the object to be measured. Even in the unlikely event that no appropriate first model exists, the first model that the classification processor 4 for the first model judges to be appropriate is always selected. In this case, an inappropriate feature value (output value) will be calculated. Particularly in the course of manufacturing a certain product, various unforeseen circumstances may arise, and unexpected input values may be obtained. In this case, it considered likely that the combination of the classification processor 4 for the first model and one or more existing first models alone will not be sufficient to deal with unforeseen input values.

Therefore, in a case in which a feature value is calculated from the combination of the classification processor 4 for the first model and one or more first models, it is particularly effective to have the aforementioned second model calculate, and present to the manager, the "deviation amount representing the amount of displacement from the first model", as in the present disclosure.

In the process of generating the second model, training data is first prepared (step S31). As described above, since the training data is common to the first model, this step corresponds to obtaining the training data resulting from steps S11 through S15 in FIG. 6. As a further example, the controller 3 may retrieve the training data stored in the storage unit 9 in the process of generating the first model.

The controller 3 analyzes the training data and selects the actual input values that are related to each actual input value as the actual input values for model creation (step S32). For each actual input value (each electromagnetic quantity) of the training data, one or more highly correlated actual input values (electromagnetic quantities) are selected, excluding the input value itself. Highly correlated unit, for example, that a change in one input value is likely to affect another input value. Conversely, if significantly changing a certain input value leaves another input value unchanged, for example, the correlation between these input values is low. In the present embodiment, the controller 3 selects an input value for each input value based on the degree of linearity, but selection is not limited to the degree of linearity.

In the present embodiment, training data was selected from the predetermined training data group by first selecting an actual input value and then selecting the training data having that actual input value.

For example, a pair of an actual input value and an actual output value is selected from the corresponding training data group, with a specific input value a1 as the actual input value and the deviation amount D of that input value a1 as the actual output value D1. One or more selected pairs can be designated as the training data.

In this method, it may be difficult to determine the deviation amount D accurately. This is because in machine learning, in general, creating a model that uses a certain input value to predict the input value itself yields a model similar to a linear regression where $y = x$ (x being the input value and y being the predicted value). It is known that a value close to a certain input value x is then outputted directly as the predicted value y. The second model in the present disclosure is also likely to calculate an input value directly as a predicted value. The value of the deviation amount D, which is the output value, may therefore be close to zero as the difference between the input value and the predicted value, which ends up being nearly the same value as the input value. Hence, when the actual input values to serve as the training data for the second model are selected, it is preferable to ensure that the deviation amount D of the actual input value itself does not become the actual output value. In other words, the accuracy of the calculated deviation amount is better if the actual input values, for an input value for which the deviation amount is to be determined as the actual output value, do not include the input value itself for which the deviation amount is to be determined. The accuracy is also better if the input values that are highly correlated with the input value of the actual output value are selected as the actual input values. Specifically, if the deviation amount D1 of a certain input value x1 is to be obtained accurately as an output value, it is preferable to create a second model by selecting, as the actual input value, an input value x2 different from the input value x1 for which the deviation amount D1 is to be determined and selecting the deviation amount D1 of the input value x1 to be determined as the actual output value.

On the other hand, if another input value x3, which is less correlated with the input value x1 for which the deviation amount D1 is to be calculated as the actual output value, is selected as the actual input value, the accuracy of the deviation amount D may degrade. This is because, in machine learning, it is generally difficult to obtain output values accurately when models are created using input values that have low correlation to output values. Therefore, when selecting the actual input values that become the training data for the second model, an input value x4 that is highly correlated with the input value x1 for which the deviation amount D1 is to be determined is preferably selected as the actual input value, so that the deviation amount can be determined with high accuracy.

We newly discovered that when the input values used in the present embodiment are a plurality of electromagnetic quantities, the electromagnetic quantities have many linear relationships with each other. We therefore decided to judge that the correlation is strong if the linearity between each electromagnetic quantity is high.

Therefore, in the present embodiment, actual input values were selected using a coefficient of determination $R^2$, which is an index for evaluating linearity in regression analysis. The coefficient of determination takes values between 0 and 1, with linearity being higher as the value is closer to 1. Consider one actual input value group, within a training data group, formed under a specific condition. As an example, the above-described plurality of electromagnetic quantities obtained from one BH curve measured by a certain excitation voltage or excitation current are grouped into an actual input value group. It is assumed that measurements were made N times to obtain this actual input value group. That is, it is assumed that N BH curves are obtained. It is assumed that 10 different electromagnetic quantities a, i.e., a1 to a10, are measured as actual input values from one of the BH curves. The set of electromagnetic quantities a1 obtained from one BH curve obtained in the first measurement are then denoted by a1_1, a2_1, a3_1, ..., a10_1. The set of electromagnetic quantities aN obtained in the $N^{th}$ measurement are a1_N, a2_N, a3_N, ..., a10_N. For the electromagnetic quantity a, the second subscript indicates the number of the BH curve, and the first subscript indicates the number of the type of electromagnetic quantity in the group with the same second subscript.

The coefficient of determination $R^2$ is then calculated between each of the electromagnetic quantities a1_1 to a10_N that correspond to the actual input value group. In a case in which a plurality of actual input value groups exist, the coefficient of determination $R^2$ is calculated between electromagnetic quantities a1_1 to a1_N and electromagnetic quantities a2_1 to a2_N. The coefficient of determination $R^2$ is also calculated between electromagnetic quantities a3_1 to a3_N and a5_1 to a5_N.

In the present embodiment, a threshold of 0.5 was set as a general guideline for the coefficient of determination $R^2$. In other words, the linearity was considered high if the coefficient of determination $R^2$ was equal to or greater than 0.5.

Therefore, one or more input values for which the coefficient of determination $R^2$ was equal to or greater than 0.5 for the input value for which the deviation amount D was to be determined were selected as actual input values and designated as actual input values for generating the second model.

The controller 3 also performs pre-processing on all input values (electromagnetic quantities in the present embodiment) of the training data (step S33). The pre-processing enables different types of input values to be compared based on the same criteria and calculated in the same way. In the present embodiment, the pre-processing is a normalization with a mean of 0 and variance of 1 for each electromagnetic quantity among all types of electromagnetic quantities. This process also outputs a normalized value for the deviation amount that is outputted from the second model and can simply indicate the number of $\sigma$ (standard deviations). Among the deviation amounts, normalized values may be specifically described as degrees of deviation. In other words, the degree of deviation is an example of a deviation amount. Here, the mean value upon normalization is not limited to 0. The variance upon normalization is not limited to 1. As another example, the pre-processing may be normalization that is a scaling technique in which the minimum value is 0 and the maximum value is 1 for each electromagnetic quantity among all types of electromagnetic quantities.

The second model is then generated by the controller 3 using the input values that have been pre-processed (step S34). In the present embodiment, an example of using least squares ridge regression to generate the second model is described.

Least squares ridge regression is a method that heavily weights the influence of highly correlated input values and weakly weights the influence of lowly correlated input values to enable determination (estimation) of a certain input value from a plurality of input values while taking weighting into account.

To calculate the degree of deviation, two main calculation processes are performed in the second model. First, the predicted value of each input value is calculated based on the training data. Second, the difference between the determined predicted value of each input value and the input value is calculated. The degree of deviation D is thus calculated. In other words, the second model is a combination of Equation 4 and Equation 5 for D1 to D10 (for the types of deviation D to be calculated).

An example of model creation satisfying the following conditions is described. Ten types of electromagnetic quantities a1 to a10 calculated from one BH curve are used as actual input values. If input values x1 to x10 calculated from a single measured BH curve are inputted to the second model, 10 different degrees of deviation D1 to D10 are outputted. Let D1 be the degree of deviation of the input value x1, D2 be the degree of deviation of the input value x1, ..., and D10 be the degree of deviation of the input value x10.

The input value x to be used to calculate any given degree of deviation D is predetermined, using the coefficient of determination $R^2$ and the like, when creating the second model. For example, assume that what is being determined in the second model is the degree of deviation D1 of the input value x1. The actual input values a5 and a7, which are closely related to the actual input value a1, i.e., the input value x1, are selected as the actual input values for creating the second model. Here, a1 to a10 represent the actual input values. A predetermined input value group is assumed to be given as x1 to x10. Here, in the case of determining the degree of deviation D1 for the input value x1 in the input value group x1 to x10, the predicted value y1 for x1 is determined from x5 and x7 in the same input value group, and the degree of deviation D5 is determined by subtracting the value of x1 from the predicted value y1 for x1.

As described above, when input values x1 to x10 selected from a measured input value group (for example, 10 types of electromagnetic quantities calculated from one measured BH curve) are inputted to the second model, 10 types of degrees of deviation D1 to D10 are outputted, which are a combination of all calculation models, i.e., the calculation model for the degree of deviation D1 that is an actual output value, the calculation model for the degree of deviation D2 that is an actual output value, ..., and the calculation model for the degree of deviation D10 that is an actual output value. Therefore, as an example, a method of creating an output model for the degree of deviation of the actual output value x1 among these calculation models is illustrated this time. The method of creating the degree of deviation calculation model for the other values x2 to x10 is the same as for x1.

The training data for the second model to be created, on which the aforementioned pre-processing has been performed, is prepared. To calculate the degree of deviation D1 for x1, it is first necessary to determine a relational equation to calculate the predicted value y1 for a1 from a5 and a7. The relational equation is a regression equation and is expressed as in Equation 1 below. The coefficient ω in Equation 1 must be determined.

[Math. 1]

$$y_1 = \omega_0 + \omega_5 a_5 + \omega_7 a_7 = \begin{pmatrix} 1 & a_5 & a_7 \end{pmatrix} \begin{pmatrix} \omega_0 \\ \omega_5 \\ \omega_7 \end{pmatrix} \quad \text{(Equation 1)}$$

Equation 2 below extends Equation 1 to N BH curves. The coefficient ω is determined from the least squares ridge regression based on training data. Assuming an ideal situation in which the training data is completely free of measurement error and noise, substituting the training data corresponding to the actual input values of Equation 1 into Equation 1 yields Equation 2.

[Math. 2]

$$\begin{pmatrix} a_{1_1} \\ a_{1_2} \\ a_{1_3} \\ \vdots \\ a_{1_N} \end{pmatrix} = \begin{pmatrix} 1 & a_{5_1} & a_{7_1} \\ 1 & a_{5_2} & a_{7_2} \\ 1 & a_{5_3} & a_{7_3} \\ \vdots & \vdots & \vdots \\ 1 & a_{5_N} & a_{7_7} \end{pmatrix} \begin{pmatrix} \omega_0 \\ \omega_5 \\ \omega_7 \end{pmatrix} \quad \text{(Equation 2)}$$

Letting B be the matrix on the left-hand side, A be the matrix containing the first piece of input value information on the right-hand side, and Ω be the matrix containing the second piece of ω information, Equation 2 is expressed as Equation 3.

[Math. 3]

$$B = \mathrm{A}\Omega \quad \text{(Equation 3)}$$

In reality, however, since the training data contains measurement error or noise, Equations 2 and 3 are not equal, and the values on the left-hand side diverge. Therefore, a combination of coefficients ω that will result in the smallest deviation is determined. If the ridge regression coefficient is α and the unit matrix is I, then the matrix Ω to be determined by least squares ridge regression is expressed as Equation 4. The ridge regression coefficient α is a high parameter to control overlearning and was set to 0.1 in the present embodiment.

[Math. 4]

$$\boldsymbol{\Omega} = \begin{pmatrix} \omega_0 \\ \omega_5 \\ \omega_7 \end{pmatrix} = (A^T\mathbf{A} + \alpha\mathbf{I})^{-1}A^T\mathbf{B} \quad \text{(Equation 4)}$$

Since each of the coefficients ω could be determined using Equation 4, the degree of deviation can be determined. Let x1 to x10 be a predetermined input value group. The degree of deviation D1 to be determined for the input value x1 can be determined from x5 and x7 of the same input value group using Equation 5. However, the predicted value of x1 is determined by ω0 + ω5 × 5 + ω7 × 7, and the difference from the input value x1 is calculated.
[Math. 5]

$$\mathrm{D} = \omega_0 + \omega_5 x_5 + \omega_7 x_7 - x_1 \quad \text{(Equation 5)}$$

The same method can be used to determine the other actual output values D2 to D10. It is not necessary to calculate the degree of deviation D for all input values. In particular, the degree of deviation D that seems to have a large influence on the product and method of producing a product may be selected and calculated.

(First calculation of degree of deviation)

FIG. 9 illustrates a flow diagram for calculating the degree of deviation. The degree of deviation is calculated using the second model generated in the flow illustrated in FIG. 8. The degree of deviation indicates the deviation (amount of displacement) from the selected first model for the input values obtained in the aforementioned feature value calculation process. The appropriateness of the first model selected in the feature value calculation process can be evaluated in terms of input values by use of the degree of deviation.

The classification processor 5 for the second model selects from the second model group 11 based on the one or more input values used in the feature value calculation process (step S41). Specifically, the classification processor 5 for the second model selects a second model_n corresponding to the first model_n selected by the classification processor 4 for the first model. In a case in which a plurality of first models was selected, the classification processor 5 for the second model selects a plurality of second models corresponding to the first models. In other words, the classification processor 5 for the second model may select one or more second models.

The deviation amount calculation unit 7 calculates the degree of deviation D using one or more input values, which are the input values used when the feature value was calculated using the first model, and the one or more selected second models (step S42).

(Judgment process)

In the present disclosure, a judgment process may be performed as necessary. The judgment unit 8 judges pass/fail of the first model or the grade of the degree of deviation based on the feature value calculated by the feature value calculation unit 6 and the degree of deviation calculated by the degree of deviation calculation unit 7. Furthermore, the judgment results are processed for easy viewing by the manager as necessary and then outputted to the display 1.

FIG. 10 illustrates an example of a flow diagram for explaining the pass/fail judgment process. First, in a case in which the degree of deviation is greater than a predetermined threshold (first threshold) (No in step S51), the judgment unit 8 judges that the selected first model was not appropriate and is judged as "fail", since the feature value estimated by the selected first model for the measured input values has a large amount of displacement relative to the training data for that first model. Here, the degree of deviation is determined for each input value. The judgment unit 8 may make a judgment of "fail" in a case in which the degree of deviation for any one input value is greater than the first threshold.

The judgment unit 8 then applies a label of "fail" to the input values judged as "fail" and accumulates these input values as actual input values for new training data (step S53). The actual input values for new training data may be stored in the storage unit 9.

In a case in which all of the degrees of deviation are equal to or less than the first threshold, the judgment unit 8 proceeds to step S52. This is because in this case, the output value estimated by the selected first model for the measured input values has a small amount of displacement relative to the training data of the first model, and the selected first model can be judged to be appropriate. Here, the degree of deviation is determined for each input value. The judgment unit 8 may proceed to step S52 in a case in which the degree of deviation for all of the input values is equal to or less than the first threshold.

The judgment unit 8 judges whether the product passes or fails based on whether the feature value is equal to or less than a predetermined threshold (second threshold) (step S52). In the example in FIG. 10, a judgment of pass is made if the feature value is equal to or less than the second threshold (Yes in step S52), and a judgment of fail is made if the feature value is greater than the second threshold (No in step S52). The judgment criteria for the pass or fail branch in step S52 may be replaced according to the content of the feature value. For example, opposite from the example in FIG. 10, a judgment of pass may be made if the feature value is equal to or greater than the second threshold (Yes in step S52), and a judgment of fail may be made if the feature value is less than the second threshold (No in step S52). The number of thresholds in the judgment of the feature value is not limited to one, and judgment may be made in multiple stages using a plurality of judgment criteria.

The following process may be performed for input values that are judged as "fail" based on the magnitude of the degree of deviation in step S53. The actual steel material surface layer hardness (feature value) is measured separately at the measurement position of the input value judged as "fail". Then, for each input value, the actually measured feature value is provided as an actual output value, along with a label of "fail". After a sufficient number of input values judged as "fail" have been accumulated, a predetermined number or more of input values provided with the "fail" label and the actually measured feature value are selected as actual input values and used as new training data. The controller 3 may generate additional first models based on this new training data. In other words, the controller 3 may also provide the actually measured feature value to each input value to which a label indicating the "fail" judgment was assigned based on the magnitude of the degree of deviation, select a predetermined number or more of the input values, and use the selected input values as new training data for creating the first model. Using the new training data created in this way, a learned model having one or more input values and having, as an output value, a feature value with a correlation that can be derived from the input values can be generated by machine learning. The specific method of generating the first model may follow the above-described FIG. 6 and its explanation. The addition of the first model can improve the calculation accuracy of the feature value.

(Display processing)

The judgment unit 8 generates information about the feature value from the calculated feature value to enable output to the display 1. The judgment unit 8 also generates information about the degree of deviation from the degree of deviation calculated in step S3 or from the judgment result obtained in step S4 to enable display on the display 1. In addition, information about the physical quantities may be generated from the measured physical quantities.

The information about the feature value, the information about the degree of deviation, and the information about the physical quantities displayed by the judgment unit 8 can be in any format. Among such formats, a two-dimensional image is particularly preferable because it is more visible to the manager of the calculation apparatus or production facility. Examples of a two-dimensional image are a chart or map.

Specifically, the information about the feature value can be a map of feature values or a chart of the feature values. The information on the degree of deviation can be a map of degrees of deviation, a chart of degrees of deviation, a map of the judgment results, or a chart of the judgment results. Among these generated pieces of information, the judgment unit 8 may generate one or more pieces of information either in a predetermined format or according to a selection made as necessary. These maps or charts may be generated in overlap or side-by-side. Furthermore, the information, generated by the judgment unit 8, about the physical quantities can similarly be at least one of a map and a chart.

In the present embodiment, the judgment unit 8 generates and outputs, to the display 1, at least one of a chart and a map that display the feature value and the degree of deviation in overlap or side-by-side. Based on at least one of the chart and map displayed on the display 1, the manager of the steel material production facility, for example, can take action such as optimizing the production parameters. FIGS. 11A to 11C are diagrams illustrating examples of color maps. FIG. 12 is a diagram illustrating an example of a chart.

FIGS. 11A to 11C illustrate examples of color maps in which feature values for steel material are displayed in colors corresponding to the values and to the measurement positions when viewing the upper surface of the steel material. Here, the feature value is the surface layer hardness relative to steel material. Each input value corresponds to a respective electromagnetic quantity. The coordinates of the measurement position are oriented toward the face of the paper, with the horizontal direction indicating the longitudinal direction of the steel material and the vertical direction indicating the width direction of the steel material. FIG. 11A illustrates the feature values calculated by the first model, FIG. 11B illustrates the degrees of deviation for input value 1, which is the first input value, and FIG. 11C illustrates the degrees of deviation for input value n, which is the $n^{th}$ input value. The vertical shading to the right side in FIGS. 11A to 11C indicates the scale of the color map. In FIG. 11A, the vertical shading denotes that the surface layer hardness of the steel material is indicated between 180 HL and 240 HL (as measured using a rebound hardness tester). Here, 180 HL to 240 HL is an example of a surface layer hardness value. The conversion value may, for example, be the HV (Vickers hardness conversion) or other hardness conversion value. In FIGS. 11B and 11C, the degree of deviation for each input value is displayed as the standard deviation $\sigma$. Values other than the standard deviation may of course be used. By such a color map being displayed on the display 1, the manager of the calculation apparatus or production facility for the steel material, for example, can confirm which electromagnetic quantity at which location has a high degree of deviation and can also confirm the hardness at each location.

FIG. 12 is a chart displaying data on the degree of deviation for each input value, stacked in a row vertically on the display screen, without association with the position on the steel material. In FIG. 12, if the degree of deviation is greater than a certain threshold (for example, the first threshold in FIG. 10), the data is displayed in black or the like. By such a chart being displayed on the display 1, the manager of a steel material production facility, for example, can immediately grasp which input values have a large degree of deviation.

[Second embodiment]

In the first embodiment, the classification processor 5 for the second model used the results selected by the classification processor 4 for the first model as is, but the present disclosure is not limited to this configuration. Therefore, as the second embodiment, the case of no clear correspondence between the first model and the second model is described, as is an example of the classification processor 5 for the second model that can be used in this case.

In the present disclosure, the first model models the interrelationship between the input values and the correlated feature value that can be derived from those input values. Therefore, the classification processor 4 for the first model is similarly derived from the input values and the correlated feature value that can be derived from the input values. The second model, on the other hand, is a model that reflects the interrelationships among the input values used to generate the first model. Basically, the classification processor 5 for the second model also reflects the interrelationships among the input values used to generate the first model.

Therefore, with respect to the first embodiment, the second embodiment differs in the process of generating the second model (step S34) and the process of selecting from the second model group 11 by the classification processor 5 for the second model (step S41). These processes are explained below. A detailed description of apparatuses and processes common to the first embodiment are omitted.

(Second generation of second model)

The second model is generated by the controller 3 using the input values that have been pre-processed (step S34). In the present embodiment, an example of using least squares ridge regression to generate the second model as in the first embodiment is described.

The flow for the process to generate the second model in the second embodiment is the same as the flow illustrated in FIG. 8. The difference is which training data from the training data group is used to generate the first or second model. If a correspondence exists, then between the first model_m, which is the $m^{th}$ model of the first model, and the second model_m, which is the $m^{th}$ model of the second model, exactly the same training data is used to generate the same number of second models as first models. On the other hand, if there is no correspondence, the second model is created by selecting appropriate training data from the training data group that generates the first model. At this time, between the first model_m, which is the $m^{th}$ model of the first model, and the second model_m, which is the $m^{th}$ model of the second model, different training data is used to generate one or more second models.

The classification processor 5 for the second model selects a second model appropriate for the object to be measured from the second model group 11 based on the one or more input values used in the feature value calculation process (step S41). The classification processor 5 for the second model may also use the selection method described in the aforementioned Reference in selecting the second model. In the present embodiment, the classification processor 5 for the second model uses a support vector machine, which a type of machine learning used for classification and regression problems, as the method of selecting the second model, but this configuration is not limiting. The number of selected second models is not limited to one. In other words, the classification processor 5 for the second model may select one or more second models.

(Case of process to judge by grade)

In addition to the pass/fail judgment process illustrated in FIG. 10, the first and second embodiments can also sort products by grade. This method can, for example, be used for product quality control.

An example is described taking a steel sheet as the product and the surface layer hardness of the steel sheet as the feature value of the product. The degree of deviation is outputted in terms of the standard deviation $\sigma$.

In the case of judging the grade of the surface layer hardness of a steel sheet, the grade is determined for a predetermined region from a plurality of pieces of information on the degree of deviation, rather than judging the degree of deviation for each predetermined input value. In the case of the present embodiment, the predetermined region is described as being a single steel sheet. In other words, the grade of the degree of deviation is judged for each steel sheet.

FIG. 17 illustrates the judgment flow using grades of the degree of deviation. Condition (a) to condition (c) are used for the judgment flow. Condition (a) requires that 1$\sigma$ be 95 % or more and 2$\sigma$ be 5 % or less for the degree of deviation of each input value included in the region of the one steel sheet. Condition (b) requires that 1$\sigma$ be 80 % or more and 3$\sigma$ be 1 % or less for the degree of deviation of each input value included in the region of the one steel sheet. Condition (c) requires that 1$\sigma$ be 10 % or more and 3$\sigma$ be 60 % or less for the degree of deviation of each input value included in the region of the one steel sheet. The judgment flow in FIG. 17 judges whether the conditions are satisfied in the order of condition (c), condition (b), and condition (a). First, if condition (c) is not satisfied (No in condition (c)), the judgment unit 8 makes a judgment of "fail" and attaches a label to the steel sheet indicating the "fail". If condition (c) is satisfied (Yes in condition (c)) but condition (b) is not satisfied (No in condition (b)), the judgment unit 8 makes a judgment of "grade 3" and attaches a label to the steel sheet indicating "grade 3". If condition (b) is satisfied (Yes in condition (b)) but condition (a) is not satisfied (No in condition (a)), the judgment unit 8 makes a judgment of "grade 2" and attaches a label to the steel sheet indicating "grade 2". If condition (a) is satisfied (Yes in condition (a)), the judgment unit 8 makes a judgment of "grade 1" and attaches a label to the steel sheet indicating "grade 1".

When the judgment unit 8 completes grading according to conditions (a) through (c) for all steel sheets to be judged, the judgment process ends. Note that three types of conditions for grading are provided in the present embodiment, but the number of types may be one or may be two or more. The present disclosure is not limited to this configuration. The grading may be changed as appropriate according to product specifications and customer requirements.

In addition, when judging abnormality in relation to grade based on the pass/fail, an indication of which physical quantity (electromagnetic quantity) deviates from the training data and by how much for one measurement position is outputted. Data in which the same physical quantity (electromagnetic quantity) deviates by the same amount can thus simply be collected as a new classification. A model may also be created multi dimensionally, using all of the degrees of deviation from each model. In this case, all models may be considered, including those not selected during classification.

(Example of application)

The calculation method and calculation apparatus described above can be used in a method of producing, a method of managing, and a facility for producing a product. The object to be measured during production may also include objects that do not remain in the product after production is complete, such as scale (corresponding to the film 15) on the steel material (corresponding to the substance 16). In other words, the object to be measured corresponds to the product during or after production. The method of producing the product or the facility for producing the product may be provided with a production step or a production facility and further provided with the aforementioned calculation method or calculation apparatus as part of measurement, control of the production process, detection of anomalies in the production process, or the like. Here, the production step or production facility may be a known production step or production facility. The production step or production facility may also be an unknown production step or production facility. For example, the production step or production facility may be those described in the aforementioned Reference.

The production step described above may be performed with the addition of a control step of controlling a production facility, using the feature value (for example, the size, mass, temperature, mechanical properties, or a combination thereof) or degree of deviation of the produced product, as obtained from the aforementioned calculation method or calculation apparatus. In other words, a production method may be realized by adding a control step to the aforementioned production step.

The production step described above may be performed with the addition of a management step of classifying based on the feature value (for example, the size, mass, temperature, mechanical properties, or a combination thereof) or degree of deviation of the produced product, as obtained from the aforementioned calculation method or calculation apparatus. In other words, a management method may be realized by adding a management step to the aforementioned production step.

The calculation method, calculation apparatus, measurement method, measurement apparatus, and measurement system described above can be used in a method of producing, a method of managing, and a facility for producing the substance 16, such as a steel material. For example, the method of producing or the facility for producing the substance 16 such as a steel material may be provided with a known production step or production facility and further provided with the aforementioned measurement method or measurement apparatus as part of an inspection. Here, the known production step or production facility may, for example, be those described in the aforementioned Reference. A management step may also be performed to classify the substance 16, produced by such a production method, based on the feature value of the substance 16 (for example, the mechanical properties such as the surface layer hardness). In other words, a management method may be realized by a production method with the addition of a management step.

Another example of application is to use the feature value for control of a certain apparatus and the degree of deviation for an abnormality of the apparatus. For example, in a case in which the feature value is the rotation speed of a motor, input value 1 is the voltage, input value 2 is the shaft pressure, and input value 3 is the motor temperature, the rotation speed of the motor can be determined as the feature value using input values 1 to 3 and the first model. Furthermore, by determining the degree of deviation from the first model for input values 1 to 3 using the second model, it is possible to judge whether the determined feature value is a normal value. For example, in a case in which there is no deviation from the first model and the rotation speed of the motor is too high, a judgment can be made to perform control to reduce the rotation speed. The reason is that the rotation speed of the motor, which is the feature value predicted from the measured input values, can be judged to be a correct value. Also, in a case in which the rotation speed is calculated as a normal value, but the input values deviate from the first model to begin with, it is possible to perform control to stop the motor, since the measured input values are judged to be abnormal due to not being based on the learning model, and the predicted rotation speed of the motor is likely to be a wrong value to begin with.

The condition for the data used in the first model and second model is that the respective feature values are associated with predetermined input value groups, each measured at the same time. The reason for this condition is that, for example, even if a machine-learned model is generated by associating the rotation speed of the motor, which is a feature value, with the input values 1 to 3, such as voltage, shaft pressure, and motor temperature, measured the previous day, the correlation between the feature value and the input value group cannot be correctly evaluated. The respective data for constructing the first model and the second model are obtained and associated when the feature value and the input value group are most related, either at the same time or at a timing corresponding to the same time. Therefore, as described above, the plurality of physical quantities measured at the same time most preferably are the "predetermined input value group". In this case as well, the same time refers to one predetermined time. Here, most of the measurements require a certain amount of time (time range). Therefore, the "same time" need not be strictly simultaneous but rather may be a certain time range required to measure one combination of input values 1 to 3.

While the present disclosure has been described with reference to the drawings and examples, it should be noted that various modifications and amendments may easily be implemented by those skilled in the art based on the present disclosure. Accordingly, such modifications and amendments are included within the scope of the present disclosure. For example, functions or the like included in each unit, each step, or the like can be rearranged without logical inconsistency, and a plurality of unit, steps, or the like can be combined into one or divided.

For example, the present disclosure can be realized as a program containing the processing content for realizing each function of the calculation apparatus 12, or a storage medium having the program recorded thereon. The present disclosure also can be realized as a program containing the processing content for realizing each function of a measurement apparatus 19, or a storage medium having the program recorded thereon. Such embodiments are also to be understood as included in the scope of the present disclosure.

The configuration of the calculation apparatus 12 described in the above embodiments is an example, and not all of the components need be included. For example, the calculation apparatus 12 may be configured without the display 1. Several variations are described below with reference to the drawings.

[Third embodiment]

This embodiment illustrates a case in which the deviation amount outputted from the second model is not a standard deviation but rather is the same physical quantity as the physical quantity inputted to the first model. For example, in a case in which the physical quantities inputted to the first model are a plurality of electromagnetic quantities (input value 1, input value 2, input value 3, input value 4, ..., input value n), the deviation amount outputted from the second model is outputted as an amount of displacement from any of the input values 1 to n. The following is a more specific explanation, taking a steel sheet with scale as the object, electromagnetic quantities as the physical quantities, and the surface layer hardness as the feature value to be outputted from the first model, as in the first embodiment. However, the following explanation is one specific example, and the present embodiment is not limited to the case of hardness prediction, as long as the method is formulated with one feature value and one or more input values.

Electromagnetic sensors are often used in technology to predict surface hardness of a thick steel sheet in a steel process. Reasons why electromagnetic sensors are used include the fact that this method does not require a contact medium like ultrasonic waves, the fact that a plurality of explanatory variables can be obtained from the shape of the BH curve or the like, and the fact that the effect of an oxide film on the thick steel sheet surface is small. The prediction model for predicting the hardness of a thick plate surface using a plurality of input values (electromagnetic quantities) obtained by electromagnetic sensors is illustrated by Equation (6) below, for example.

[Math. 6]

$$\mathrm{hv} = \omega_0 + \omega_1 x_1 + \omega_2 x_2 + \cdots + \omega_n x_n \quad \text{(Equation 6)}$$

Here, hv is the "hardness value", which is the predicted hardness of the thick plate surface, ω0 is a constant term, ω1 to ωn are coefficients, and x1 to xn are input values, which in this example are a plurality of electromagnetic quantities. The prediction model may be a linear regression model, as in Equation (6), but is not limited to this and may, for example, be a quadratic regression model or the like, and it suffices for the prediction model to be a method that calculates a feature value by weighting input values. The coefficient ω represents a value of the effect on the hardness value when the corresponding electromagnetic quantity changes by 1 (unit quantity) and is determined in advance by the training data. For example, if the electromagnetic quantity x1 is increased by 1, the calculated hardness value will increase by the coefficient ω1. The regression coefficients of the prediction model that predict the hardness of the thick plate surface thus represent the amount of weighting of the respective electromagnetic quantities, which are the input values, on the hardness value.

A reference value indicating the hardness of the thick plate surface predicted from the deviation amount of each electromagnetic quantity (hereinafter referred to as "reference amount of displacement") is, for example, illustrated by Equation (7) below. The reference amount of displacement has the meaning of a reference value for how much the predicted hardness value deviates from the actual hardness value.

[Math. 7]

$$\mathrm{Deq} = \omega_1 D_1 + \omega_2 D_2 + \cdots + \omega_n D_n \qquad \text{(Equation 7)}$$

Here, Deq is the reference amount of displacement, and D1 to Dn are deviations, respectively corresponding to the input values x1 to xn. Also, ω is the same as in Equation (6). For example, the coefficient ω1 represents the effect on the hardness value when the input value x1 changes by 1, as described above. The product of the amount of deviation from the first model, D1, and ω1, "ω1D1", represents the effect on the hardness value due to the amount of displacement of the input value x1. Similarly, "ω2D2" represents the effect on the hardness value due to the amount of displacement of the input value x2. Therefore, Equation (7), which adds up all the terms indicating the effect on the hardness value caused by these input values, is a formula for calculating the reference amount of displacement (Deq) taking all input values into account.

In the present embodiment as well, the method of calculating the reference amount of displacement basically follows FIG. 2. However, instead of the feature value being calculated (step S2), the weight coefficients are obtained. The grade of the amount of deviation is judged (step S4) by calculating the reference amount of displacement.

First, input values (electromagnetic quantities at a measurement point) are obtained from the sensor. The sensor may be an electromagnetic sensor as illustrated in FIG. 4, a type commonly used in eddy current testing and the like. The weight coefficient for each electromagnetic quantity is then obtained from a machine learning model that predicts the hardness value. The deviation amount is also calculated for the measured electromagnetic quantity. For example, a least squares ridge regression model may be used to determine a predicted value, and the deviation amount may be calculated from the difference between the predicted value and the actual measured values, but calculation is not limited such a method. For example, the LOF method, which can calculate the distance between a predicted value and an actual measured value in $N^{th}$-order space, may be used. From the obtained weight coefficients and the calculated deviation amount, the reference amount of displacement is calculated and outputted as the resulting information (calculation result).

Here, based on the outputted reference amount of displacement, the operator can, for example, judge whether a steel sheet has passed or failed. For example, the operator may decide the probability, of the predicted hardness value being wrong, at which the steel sheet is to be judged as failing, referring to previously obtained specification values, customer requirements, reference values, and the like. In other words, one form of use is to set a threshold for the reference amount of displacement, and if even one measurement point exceeds the threshold, to make a judgment of failure.

(Example of application of third embodiment)

In FIGS. 18 and 19, the results of calculating the predicted hardness reference amount of displacement for two thick steel sheets have been mapped, and a binarization process has been performed with 20 HV as the threshold. Both of the analyzed thick steel plates are approximately 3 m in the width direction, 12 m in the longitudinal direction, and 3 cm thick. After the predicted values were calculated using the method of the present embodiment, the actual hardness values were measured by echo chip measurement.

FIG. 18 illustrates the results of analysis of a normal plate. "Normal" unit that the difference between the actual measured value and predicted value is within 20 HV at the locations where hardness was measured, except for the electromagnetic sensor dead zone at the plate edge (D in FIG. 18). The predicted hardness reference amount of displacement was within the range of -5 HV to +5 HV over the entire plate surface, and no locations were off by 20 HV or more, except for the electromagnetic sensor dead zone.

FIG. 19 illustrates the results of analysis of an abnormal plate. "Abnormal" means that there are one or more points at which the difference between the actual measured value and predicted value is 20 HV or more among the locations where hardness was measured, except for the electromagnetic sensor dead zone at the plate edge. The predicted hardness reference amount of displacement was approximately 15 HV over the entire plate surface, and even outside of the sensor dead zone, there were locations off by 20 HV or more near the center of the plate.

[First variation]

FIG. 13 illustrates a variation of the measurement system 20 that includes the calculation apparatus 12 of FIG. 1. This variation corresponds to both the first and second embodiments. Components with the same functions as in FIG. 1 are indicated by the same symbols, and a detailed explanation is omitted. In FIG. 13, a display 1a is provided in the calculation apparatus 12, a display 1b in the physical quantity acquisition unit 2, and a display 1c in another location. This configuration is preferable in a case in which the distance between the calculation apparatus 12 and the physical quantity acquisition unit 2 is greater than in the second variation described below, and the operation manager for the physical quantity acquisition unit 2 who is in the vicinity of the physical quantity acquisition unit 2 and the process manager for the calculation apparatus 12 who is in the vicinity of the calculation apparatus 12, which is located far away, are separate managers. In this case, the display c can be provided in the facility for producing the product. For example, the physical quantity acquisition unit 2 may be incorporated into the facility for producing the product, the calculation apparatus 12 may be provided far away from the physical quantity acquisition unit 2, and measurement of physical quantities, calculation of feature values, and calculation of degrees of deviation may be almost fully automated for the product being produced.

The displays 1a, 1b, 1c work in the same way as the display 1 in FIG. 1. The configuration is also the same as in FIG. 1. Information selected as appropriate by the controller 3 among the information on the physical quantity, feature value, and degree of deviation calculated by the controller 3 is displayed. As in the first embodiment or second embodiment above, the measured physical quantities may be outputted together with this information. The specific configuration of the displays 1a, 1b, and 1c and the information to be displayed are the same as in FIG. 1.

In the case of two or more such displays being provided, the display content may, for example, be changed as appropriate depending on the kind of work performed by each manager monitoring the displays 1a, 1b, and 1c. For example, the display 1a in the calculation apparatus 12 displays information about the degree of deviation, calculated using one or more second models outputted from the controller 3, for the process manager. Furthermore, as in the case of FIG. 1 above, information about the feature value or information about the measured physical quantities may also be selected as appropriate and displayed together with the above information. Next, the display 1b in the physical quantity acquisition unit 2 outputs the feature value, calculated using one or more first models outputted from the controller 3, for the operation manager. Furthermore, information about the physical quantities measured by the physical quantity measurement unit 2a and the controller 3 may be selected as appropriate and displayed together with the above information. The display 1c provided at any location in the production facility outputs the feature value, calculated using one or more first models outputted from the controller 3, for other operation managers.

The scanning unit 25 moves the sensor 14 to the predetermined measurement position for the product to be produced in the production facility under the control of the controller 3. By the predetermined measurement position being moved relative to the product by the scanning unit 25, the measurement of the physical quantities at the required measurement position, the calculation of the feature value, and the calculation of the degree of deviation can be performed automatically.

[Second variation]

FIG. 14 illustrates another variation of a measurement system that includes the calculation apparatus 12 of FIG. 1. Components with the same functions as in FIGS. 1 and 13 are indicated by the same symbols, and a detailed explanation is omitted. In FIG. 14, the calculation apparatus 12 and the measurement apparatus 19 for measuring specific physical quantities of the product are connected via a network to configure a different measurement system from those in FIGS. 1 and 13. This example is particularly preferable in a case in which the calculation apparatus 12 and the measurement apparatus 19 are separated by a very large distance and have different managers. This example is even more preferable in a case in which the calculation apparatus 12 and the measurement apparatus 19 are located in different countries and used by different companies.

The calculation apparatus 12 is provided with the controller 3, the storage unit 9, the display 1a, and a data acquisition unit 21. The data acquisition unit 21 is controlled by the controller 3.

The measurement apparatus 19 is provided with the display 1b, the physical quantity acquisition unit 2, a data output unit 22, and a controller 24 for the physical quantity acquisition unit. The physical quantity acquisition unit 2 is provided with the physical quantity measurement unit 2a and the scanning unit 25. The controller 24 for the physical quantity acquisition unit includes the data output unit 22 and the physical quantity acquisition unit 2.

The data acquisition unit 21 and the data output unit 22 are connected via a network.

The sensor 14 in the physical quantity measurement unit 2a obtains a signal for the object to be measured. This signal corresponds to a signal about the physical quantity of the object to be measured.

The scanning unit 25 of the physical quantity acquisition unit 2 moves the sensor 14 to the measurement position relative to the object to be measured. A variety of technologies for movement can be used, depending on the production facility in use. The technology for movement can utilize wheels, arms, robotic arms, or the like. Movement may also be by human or mechanical power. The scanning unit 25 is controlled by the controller 24 for the physical quantity acquisition unit.

The controller 24 for the physical quantity acquisition unit measures physical quantities, i.e., controls the physical quantity measurement unit 2a and the scanning unit 25.

The controller 24 for the physical quantity acquisition unit functions as a physical quantity calculator 29b that calculates physical quantities as measured values based on the signal obtained by the physical quantity measurement unit 2a.

The controller 24 for the physical quantity acquisition unit outputs the physical quantities, calculated as input values based on the measured signal, from the data output unit 22 to the calculation apparatus 12 via a network including the Internet. The controller 3 of the calculation apparatus 12 obtains the outputted physical quantities via the data acquisition unit 21 and stores the physical quantities in a specific area of the storage unit in the calculation apparatus 12. The result is stored as the measured physical quantity group 26.

The storage location of physical quantities extracted as measured values is not limited to the storage unit 9 of the calculation apparatus 12. For example, the controller 24 for the physical quantity acquisition unit may store the physical quantities extracted as measurement values in a non-illustrated storage unit provided in the measurement apparatus 19.

The controller 24 for the physical quantity acquisition unit, like the controller 3, is configured to include one or more processors in the measurement apparatus 19. The processor can, for example, be a general-purpose processor or a dedicated processor specialized for particular processing, but the processor is not limited to these examples and may be any processor. The controller 24 for the physical quantity acquisition unit controls the entire operations of the measurement apparatus 19, not only the aforementioned processing. The controller 24 for the physical quantity acquisition unit executes control of the physical quantity acquisition unit 2, control of the data acquisition unit 21, and control of a data acquisition unit 23 according to programs read from a non-illustrated storage unit inside the measurement apparatus 19, from the storage unit 9, or from an accessible storage apparatus. The controller 24 for the physical quantity acquisition unit also functions as the physical quantity calculator 29.

The controller 3 then calculates information about the feature value and information about the degree of deviation from the obtained physical quantities. If necessary, information about the measured physical quantities may be calculated. Since the methods of these calculations are the same as in FIG. 1, a detailed explanation is omitted. The storage of the calculated feature value group 27 and the calculated deviation amount group 28 in the storage unit 9 is also similar to the case in FIG. 1, and therefore a detailed explanation is omitted.

The controller 3 then transmits the information about the feature value, calculated by the one or more first models outputted by the controller 3, from the data acquisition unit 21 to the measurement apparatus 19 via the network. The controller 24 for the physical quantity acquisition unit obtains the transmitted information about the physical quantities from the data acquisition unit 23 inside the measurement apparatus 19 and displays the information on the display 1b. At this time, information about the measured physical quantities may also be displayed.

In conjunction with this display, the controller 3 displays information about the degree of deviation, calculated by the one or more second models outputted by the controller 3, on the display 1a of the calculation apparatus 12. At this time, at least one of the information about the feature value calculated by the one or more first models and the information about the measured physical quantities may be displayed together with the information about the degree of deviation.

Thus, in the example of FIG. 14, in a case in which there are separate managers for the calculation apparatus 12 and the measurement apparatus 19, which are located remotely from each other, the information appropriate for the work of each manager can be selected as appropriate and displayed on the respective displays 1a and 1b. Of course, in the case of two or more displays, as in the second variation, it suffices to be able to appropriately select and display information about the feature value, information about the degree of deviation, or information about the physical quantities on the respective displays 1a and 1b.

Here, the data acquisition unit 21, the data output unit 22, and the data acquisition unit 23 may have any appropriate configuration. The functions are not limited, as long as the technology enables exchange of information over a network. Any unit to connect to the Internet can be used, for example. A physical server or a virtual server on a network, a representative example of which is a cloud service, may be used, for example. Data may also be exchanged using an e-mail service.

The data acquisition unit 21 is controlled by the controller 3. The data output unit 22 is controlled by the controller 24 for the physical quantity acquisition unit.

The data output unit 22 and the data acquisition unit 21 may be an integrated unit provided with both functions.

Here, the controller 24 for the physical quantity acquisition unit, the storage unit (not illustrated), and the display 1b of the measurement apparatus 19 may have any appropriate configuration. For example, the controller 24 for the physical quantity acquisition unit, the storage unit (not illustrated), the display 1b, the data output unit 22, and the data acquisition unit 23 in FIG. 14 are configured by a single apparatus including a processor, such as a computer, but may be configured by a plurality of computers or the like that are connected by a network and can transmit and receive data and the like. The measurement apparatus 19 may be configured by the controller 24 for the physical quantity acquisition unit, the non-illustrated storage unit, the display 1b, the data output unit 22, and the data acquisition unit 23 of the measurement apparatus in FIG. 14 being connected electrically, physically or via a network. The controller 24 for the physical quantity acquisition unit, the storage unit (not illustrated), the display 1b, the data output unit 22, and the data acquisition unit 23 of the measurement apparatus 19 may be configured with a portion thereof included in one computer and the rest in a different computer. For example, the storage unit of the measurement apparatus 19 may be in a separate computer connected by a network to the computer that includes the controller 24 for the physical quantity acquisition unit, the display 1b, the data output unit 22, and the data acquisition unit 23. The processing performed by the controller 24 for the physical quantity acquisition unit may be performed as distributed processing across a plurality of computers. In this case, the functions of the controller 3 may be realized by the processors in the plurality of computers working together. For example, the judgment process executed by the judgment unit 8 may be executed on a different computer from the computer that performs the calculation processes executed by the feature value calculation unit 6 and the deviation amount calculation unit 7.

The controller 24 for the physical quantity acquisition unit, the data output unit 22, the physical quantity calculator 29b, and the display 1b may be configured by a general-purpose computer, a desktop PC, or the like.

The non-illustrated storage unit of the measurement apparatus 19 may store programs. The controller 24 for the physical quantity acquisition unit may store the physical quantities extracted as measurement values in this storage unit. The storage unit of the measurement apparatus includes one or more memories. The memories can be any memory, including but not limited to a semiconductor memory, a magnetic memory, or an optical memory. The storage unit of the measurement apparatus is built into the same apparatus as the controller 24 for the physical quantity acquisition unit, for example, but can also be configured to be accessed by the controller 24 for the physical quantity acquisition unit via any unit.

[Third variation]

FIG. 15 illustrates another variation of a measurement system that includes the calculation apparatus 12 and the measurement apparatus 19 of FIG. 14. Components with the same functions as in FIGS. 1, 13 and 14 are indicated by the same symbols, and a detailed explanation is omitted. FIG. 15 differs in that the physical quantity calculator 29b that calculates physical quantities as measured values based on the signal obtained by the physical quantity measurement unit 2a is also provided in the controller 3 inside the calculation apparatus 12.

In this case, the signal related to the physical quantities measured by the physical quantity measurement unit 2a is transmitted from the data output unit 22 to the data acquisition unit 21 of the calculation apparatus 12 via the network by the controller 24 for the physical quantity acquisition unit. The controller 3 first takes the transmitted signal from the data acquisition unit 21 and stores the signal in the storage unit 9. The controller 3 then calculates the measured physical quantities from the transmitted signal and stores the result in the measured physical quantity group 26 in the storage unit 9. The controller 3 then calculates the feature value and degree of deviation using these measured physical quantities.

The signal related to the physical quantities measured by the physical quantity measurement unit 2a may be stored by the controller 24 for the physical quantity acquisition unit in the non-illustrated storage unit inside the measurement apparatus 19.

The physical quantity calculator 29a need not be provided on the measurement apparatus 19 side. In this case, the calculation of the measured physical quantities, which become the input values, based on the signal related to the physical quantities measured by the physical quantity measurement unit 2a is performed only by the controller 3 of the calculation apparatus 12.

For the third variation as well, this example is particularly preferable in a case in which the calculation apparatus 12 and the measurement apparatus 19 are separated by a very large distance and have different managers. This example is even more preferable in cases in which the calculation apparatus 12 and the measurement apparatus 19 are located in different countries or used by different companies.

(Case of no physical quantity acquisition unit 2)

In FIG. 1, a physical quantity input unit (not illustrated) may be provided instead of the physical quantity acquisition unit 2. This unit may be any unit by which physical quantities (input values) can be manually input, such as a keyboard, mouse, tablet, or smartphone, and which is useable as a terminal apparatus for input. The physical quantity input unit is connected to the calculation apparatus 12 electrically, physically, or via a network. When physical quantities are inputted from the physical quantity input unit, the controller 3 stores the input as measured physical quantities in a specific area of the storage unit 9. Subsequently, the controller 3 calculates the feature value and degree of deviation using these inputted physical quantities as input values. In this way, the present disclosure enables use of the calculation apparatus 12 not only as part of the measurement system 20, but also simply as a feature value calculation apparatus and a deviation amount calculation apparatus.

[Fourth variation]

A further variation of FIG. 15 (fourth variation) is illustrated in FIG. 20. For the third variation as well, the calculation apparatus 12 and the measurement apparatus 19 are separated by a very large distance, and the configuration example of the fourth variation is particularly preferable in cases such as when the calculation apparatus 12 and the measurement apparatus 19 have different managers. The configuration example of the fourth variation is particularly preferable in cases such as when the calculation apparatus 12 and the measurement apparatus 19 are located in different countries or companies. Here, only the parts of the fourth variation that differ from those of the third variation are described to avoid duplicate explanation. To distinguish from a second calculation apparatus 12s, the calculation apparatus 12 is also referred to below as the first calculation apparatus.

The second calculation apparatus 12s is installed inside or near the measurement apparatus 19. The second calculation apparatus 12s is provided with a controller 3s and a storage unit 9s. The controller 3s includes a data acquisition unit 21s, a classification processor 4s for the first model, and a feature value calculation unit 6s. The storage unit 9s also includes a first model group 10s, a measured physical quantity group 26s, and a calculated feature value group 27s. These components have the same functions as the components with the same names in the first calculation apparatus.

The physical quantities from the data output unit 22 of the controller 24 for the physical quantity acquisition unit are transmitted to the second calculation apparatus 12s inside the measurement apparatus 19 and to the calculation apparatus 12. Since the same data as for the second calculation apparatus 12s is also transmitted to the feature value calculation unit 6 of the calculation apparatus 12, the feature value calculation unit 6s of the second calculation apparatus 12s and the feature value calculation unit 6 of the calculation apparatus 12 produce the same output. The degree of deviation is outputted by the deviation amount calculation unit 7 and the second model group 11 of the calculation apparatus 12. Thus, for example, the manager managing the second calculation apparatus 12s can run a simulation on the adequacy of the first model in the feature value calculation unit 6s. Then, one manager can create new training data from the input values with a high degree of deviation and the corresponding output values and can use that training data to create a new first model. After a new first model is created, the new first model can be provided to other managers via the network. Here, in the third embodiment above, an example has been illustrated in which the predicted hardness reference amount of displacement is outputted. For example, it is possible to work collaboratively so that, based on the predicted hardness reference amount of displacement, one manager obtains the necessary information from another manager (such as the true value by measurement) while proceeding with the creation of the necessary first model.

(Other methods of generating the second model)

As a method of generating the second model, a least squares ridge regression model was used in the above embodiment, but this example is not limiting. For example, multiple regression analysis such as least squares Lasso regression may be used. Any other method to predict and calculate one variable from multiple variables can be used generate the second model. For example, the naive Bayes method, which makes binary decisions based on probability calculations, Kullback-Leibler divergence, and the like may be used. For example, the KNN/LOF method, which is used in anomaly detection and the like to determine the distance of data from the first model, may be used. Another example that may be used is a neural network, which is one form of deep learning. However, a method that can perform grading to judge one measurement point and one steel sheet with greater accuracy, i.e., a method that can output continuous values rather than binary decisions, is more preferable.

Here, it is possible to use the value directly instead of the standard deviation as the output value (degree of deviation) from the second model. In this case, the model is created without a standardization process in the preprocessing stage. Here, in the case of binarization, the areas where the degree of deviation is equal to or greater than a certain threshold may be displayed in black, for example, and the areas where the degree of deviation is below the threshold may be displayed in white, for example. Binarization facilitates visualization and management by operators. Binarization is possible both when the output value from the second model is a standard deviation and when the value is used as is.

Although the configuration of the measurement system 20 has been illustrated in FIG. 1 and FIGS. 13 to 15, the following further variations and forms of use are possible. A plurality of the variations and forms of use listed below may be applied in combination. For example, in FIG. 1, the calculation apparatus 12 and the physical quantity acquisition unit 2 may be provided in the scanning unit 25. Since the calculation apparatus 12 and the physical quantity acquisition unit 2 are integrated, either one may be controlled by the controller 3. The display 1 may display information on physical quantities, feature values, and degrees of deviation for the operator. For example, in FIG. 13, the calculation apparatus 12 may be located far away from the physical quantity acquisition unit 2. The display 1b of the physical quantity acquisition unit 2 and the scanning unit 25 may be integrated. The operation manager may be near the physical quantity acquisition unit 2. The connection between the calculation apparatus 12 and the physical quantity acquisition unit 2 may include a network. The measurement system 20 may be realized by an on-line apparatus that is integrated into the production line. The physical quantity acquisition unit 2 that includes the scanning unit 25 may be controlled by the controller 3 of the calculation apparatus 12. The process manager may be near the calculation apparatus 12. Since the calculation apparatus 12 and the physical quantity acquisition unit 2 are integrated, either one may be controlled by the controller 3. The display 1a may display at least information about the degree of deviation (such as information on physical quantities, feature values, and degrees of deviation) for the operator. The display 1b may display at least information about the degree of deviation (such as information on physical quantities, feature values, and degrees of deviation) for the operator. The display 1c may be installed in a different location from the display 1a and display 1b to display necessary information for the purpose of installation. For example, in FIG. 14, the physical quantity acquisition unit 2 and the calculation apparatus 12 may be connected by a network. The country of implementation of the physical quantity acquisition unit 2 and the country of implementation of the calculation apparatus 12 may be different. The implementer of the physical quantity acquisition unit 2 and the implementer of the calculation apparatus 12 may be different. The data acquisition unit 21 may be provided with an output function to output data. The data output unit 22 may be provided with an acquisition function to obtain data. The controller 24 for the physical quantity acquisition unit, the display 1b, and other components of the measurement apparatus 19 may, for example, be realized by a computer provided with a CPU, a memory, an HDD, a storage device, a monitor, a keyboard, and a mouse. The functions of each component (including non-illustrated components) may be realized by the controller 24 for the physical quantity acquisition unit executing processing. The display 1a and the display 1b should be arranged according to the allocation of the operator or process manager, or the nature of the work. The measurement system 20 may be realized by an on-line apparatus that is integrated into the production line. The scanning unit 25 and the physical quantity measurement unit 2a may be controlled by the controller 24 for the physical quantity acquisition unit. The physical quantity calculated by the controller 24 for the physical quantity acquisition unit may be outputted from the data output unit 22, transmitted over a network to the data acquisition unit 21, and stored in the calculation apparatus 12. For example, in FIG. 15, the signal may be measured by the measurement apparatus 19, the signal may be transmitted to the calculation apparatus 12, and the physical quantities may be calculated by the physical quantity calculator 29a of the controller 3, or the signal may be measured by the measurement apparatus 19, the physical quantities may be calculated by the physical quantity calculator 29a, and the physical quantities may be transmitted to the calculation apparatus 12.

As described as an embodiment above, the calculation method and calculation apparatus 12 are not limited to steel material but rather are used in the production of products. Here, although applications in production facilities where substances are produced have mainly been described as a form of use in the production of products, the calculation method and calculation apparatus 12 may be used in inspections, maintenance, and the like related to production. Accordingly, the calculation method and calculation apparatus 12 are used in the production or use (including inspection, maintenance, and the like) of products.

Here, a supplementary explanation is provided for addition of a model to the first model group 10 and the second model group 11. In the present embodiment, a method is adopted wherein after judgment of whether the input values are appropriate for the machine learning model in use, a new training data group is created based on the input values that are judged to be inappropriate, and a new first model is created. By such a process being performed, it is possible to make accurate predictions for data that could not be accurately predicted by the existing first models. For example, in conventional technology (see JP 2017-187820 A as a reference), the active model and the like currently used in abnormality diagnosis are overwritten and updated. The conventional technology is useful from the viewpoint of reducing an increase in data volume, because the number of abnormality diagnosis models at any given time is a fixed number (which does not increase or decrease). However, overwriting the model in use makes it difficult to reproduce judgments for the same conditions in the past. Particularly in production of products, it is desirable to retain as many of the models used in the past as possible from the viewpoint of operational stability and identification of the causes when defects or the like occur. In addition to the first model, which can function as an abnormality diagnosis model, the calculation method and calculation apparatus according to the present embodiment use the second model that outputs the displacement between the first model and the measured values (input values) as a deviation amount. In a case in which the input values are inappropriate for the first model group 10 currently in use, a new training data group is created based on the input values judged to be inappropriate, and a new first model is created. The newly created first model is added to the first model group 10. The first model group 10 is not completely overwritten, and the number of first models constituting the first model group 10 varies with time. Here, it is possible to delete infrequently used first models from the first model group 10 to control the increase in data volume. In this way, an increase in the data volume can be addressed.

## REFERENCE SIGNS LIST

1 Display
1a Display (in the calculation apparatus)
1b Display (in the physical quantity measurement unit or in the measurement apparatus)
1c Display (other)
2 Physical quantity acquisition unit
2a Physical quantity measurement unit
3 Controller
3s Controller (in the measurement apparatus 19)
4 Classification processor for first model
4s Classification processor for first model (in the measurement apparatus 19)
5 Classification processor for second model
6 Feature value calculation unit
6s Feature value calculation unit (in the measurement apparatus 19)
7 Deviation amount calculation unit
8 Judgment unit
9 Storage unit
9s Storage unit (in the measurement apparatus 19)
10 First model group
10s First model group (in the measurement apparatus 19)
11 Second model group
12 Calculation apparatus (first calculation apparatus)
12s Second calculation apparatus
13 Signal transmitting and receiving unit
14 Sensor
15 Film
16 Substance
17 Excitation coil
18 Magnetizing yoke
19 Measurement apparatus
20 Measurement system
21 Data acquisition unit (in the calculation apparatus 21)
21s Data acquisition unit (in the measurement apparatus 19)
22 Data output unit (in the measurement apparatus 19)
24 Controller for physical quantity acquisition unit (in the measurement apparatus 19)
25 Scanning unit
26 Measured physical quantity group
26s Measured physical quantity group (in the measurement apparatus 19)
27 Calculated feature value group
27s Calculated feature value group (in the measurement apparatus 19)
28 Calculated deviation amount group
29a Physical quantity calculator (in the controller 3 in the calculation apparatus 12)
29b Physical quantity calculator (in the controller 24 for the physical quantity acquisition unit)

## Claims

**1.** A calculation method to be used in production or use of a product, the calculation method comprising:

a feature value calculation step of calculating a feature value using one or more input values selected from a predetermined input value group and one or more first models; and
a deviation amount calculation step of calculating a deviation amount, which is an amount of displacement from the first model for a predetermined input value from the input value group, using one or more input values selected from the input value group and one or more second models, wherein
the second model and the first model are machine learning models generated using one or more pieces of training data respectively selected from a predetermined training data group.

**2.** The calculation method according to claim 1, further comprising a judgment step of comparing the deviation amount with a preset threshold and judging pass/fail of the first model being used or a grade of the deviation amount.

**3.** A method of producing a product, the method comprising:

a production step of producing a product, wherein
in the production step, the calculation method according to claim 1 or 2 is performed.

**4.** A method of managing a product, the method comprising:

a production step of producing a product and performing the calculation method according to claim 1 or 2; and
a management step of classifying the product based on at least one of the feature value and a deviation amount.

**5.** A calculation apparatus to be used in production or use of a product, the calculation apparatus comprising:

feature value calculation unit configured to calculate a feature value using one or more input values selected from a predetermined input value group and one or more first models; and
deviation amount calculation unit configured to calculate a deviation amount, which is an amount of displacement from the first model for a predetermined input value from the input value group, using one or more input values selected from the input value group and one or more second models, wherein
the second model and the first model are machine learning models generated using one or more pieces of training data respectively selected from a predetermined training data group.

**6.** The calculation apparatus according to claim 5, further comprising judgment unit configured to compare the deviation amount with a preset threshold and judge pass/fail of the first model being used or a grade of the deviation amount.

**7.** The calculation apparatus according to claim 5 or 6, further comprising a data acquisition unit configured to obtain one or two among input values of the first model and a signal measured to obtain input values of the first model.

**8.** A facility for producing a product, the facility comprising:

a production facility configured to produce a product; and
the calculation apparatus according to any one of claims 5 to 7.

**9.** A measurement method comprising:

a measurement step of measuring a signal related to a physical quantity of an object to be measured, wherein
the calculation method according to claim 1 or 2 is performed, taking the physical quantity obtained from the measured signal as the one or more input values, and the feature value calculated in the feature value calculation step as a measurement value.

**10.** A method of producing a product, the method comprising:

a production step of producing a product, wherein
the production step includes the measurement method according to claim 9.

**11.** A method of managing a product, the method comprising:

a production step of producing a product, the production step including the measurement method according to claim 9; and
a management step of classifying the product based on at least one of the feature value and the deviation amount of the produced product.

**12.** A measurement system comprising:

a physical quantity measurement unit configured to measure a signal related to a physical quantity of an object to be measured; and
the calculation apparatus according to claim 5 or 6, which takes the physical quantity obtained from the measured signal as the one or more input values, and the feature value calculated by the feature value calculation unit as a measurement value.

**13.** A facility for producing a product, the facility comprising:

a production facility configured to produce a product; and
the measurement system according to claim 12.

**14.** A measurement apparatus comprising:

a data output unit;
a physical quantity measurement unit configured to measure a signal related to a physical quantity of an object to be measured; and
a controller for a physical quantity acquisition unit, the controller configured to execute a process of outputting the measured signal to an external calculation apparatus to obtain one or more input values, wherein
the calculation apparatus comprises

feature value calculation unit configured to calculate a feature value using one or more input values and one or more first models; and
deviation amount calculation unit configured to calculate a deviation amount, which is an amount of displacement from the first model for the input value, using one or more input values selected from the input values and one or more second models.

**15.** The measurement apparatus according to claim 14, further comprising a physical quantity calculator configured to calculate the physical quantity as the measured physical quantity from the measured signal, wherein
the controller for the physical quantity acquisition unit is configured to execute a process of outputting the measured physical quantity as the one or more input values instead of the measured signal to obtain the one or more input values.

**16.** The measurement apparatus according to claim 14 or 15, wherein the controller for the physical quantity acquisition unit is configured to execute a process of obtaining at least one of information about the calculated feature value and information about the calculated deviation amount from the calculation apparatus.

**17.** A method of creating training data, the method comprising:

selecting, as actual input values, a predetermined number or more of input values judged as fail or for which the grade of the deviation amount is judged to be equal or worse than a predetermined reference from the pass/fail or the grade of the deviation amount of the first model calculated by the calculation method according to claim 2;
assigning, to the selected actual input values,

a feature value actually measured as an actual output value, and
a label indicating the fail or that the grade of the deviation amount is equal or worse than the predetermined reference; and

designating as training data for generating the first model.

**18.** Training data for generating a first model, the training data comprising:

a predetermined number or more of actual input values of the first model; and
for each actual input value,

a feature value actually measured as an actual output value, and
a label assigned from the pass/fail or the grade of the deviation amount of the first model calculated by the calculation method according to claim 2, the label indicating the fail or that the grade of the deviation amount is equal or worse than a predetermined reference.

**19.** A method of generating a model, the method comprising:

by using the training data according to claim 18,
generating, by machine learning, a learned model having one or more input values selected from a predetermined input value group, and having, as an output value, a feature value with a correlation that can be derived from the input values.

**20.** A program for a calculation apparatus to be used on the calculation apparatus according to any one of claims 5 to 7, the program being configured to cause a computer to perform functions of the feature value calculation unit and the deviation amount calculation unit.

**21.** A storage medium storing a program to be used on the calculation apparatus according to any one of claims 5 to 7, the storage medium storing a calculation apparatus program configured to cause a computer to perform functions of the feature value calculation unit and the deviation amount calculation unit.

**22.** A program to be used on the measurement apparatus according to any one of claims 14 to 16,
the program being configured to cause a computer to perform functions of the calculation apparatus and the data output unit.

**23.** A storage medium storing a program to be used on the measurement apparatus according to any one of claims 14 to 16,
the storage medium storing a program configured to cause a computer to perform functions of the calculation apparatus and the data output unit.

FIG. 1

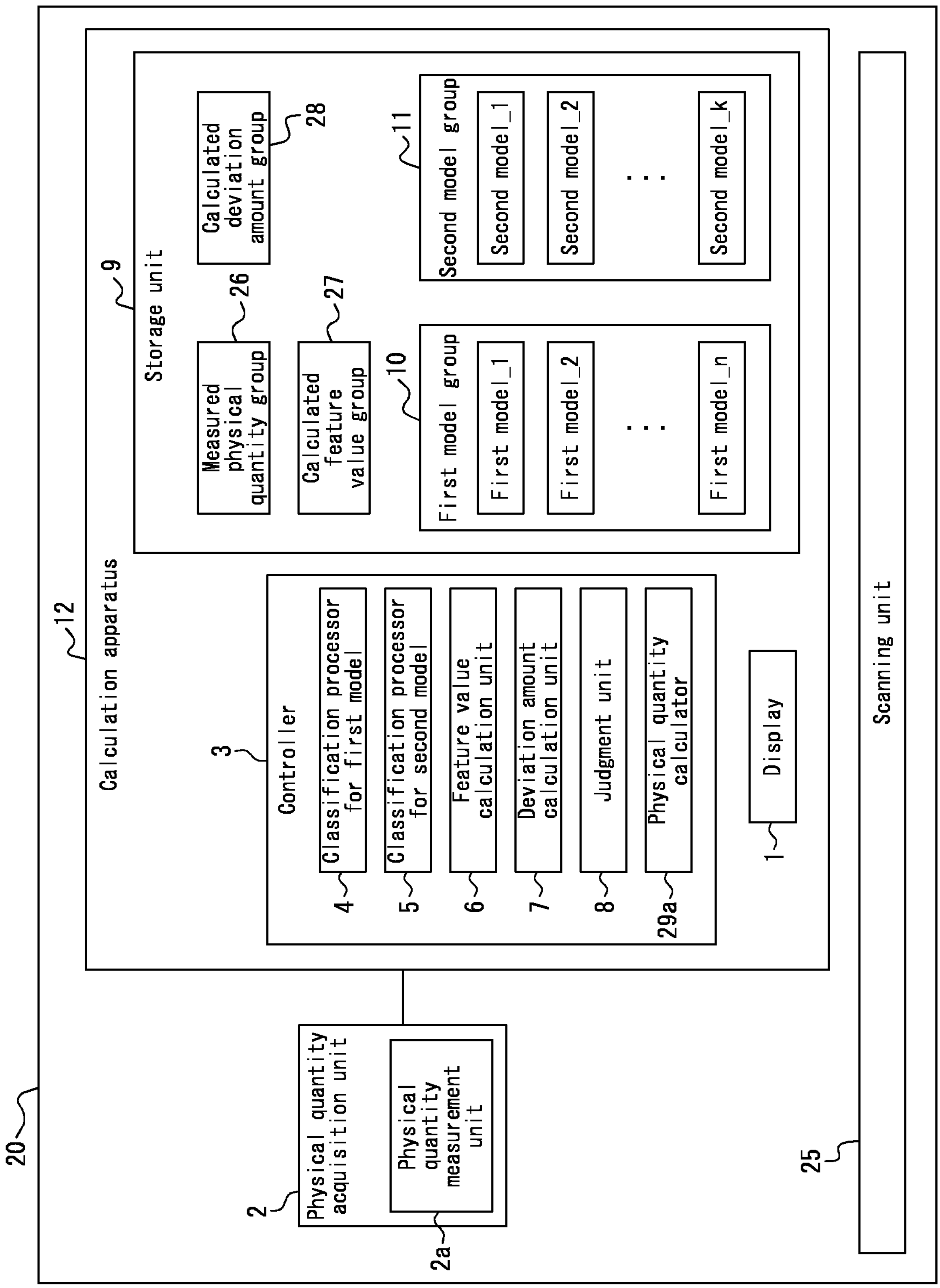
20
2
Physical quantity acquisition unit
2a
Physical quantity measurement unit
12
Calculation apparatus
3
Controller
4
Classification processor for first model
5
Classification processor for second model
6
Feature value calculation unit
7
Deviation amount calculation unit
8
Judgment unit
29a
Physical quantity calculator
1
Display
9
Storage unit
26
Measured physical quantity group
27
Calculated feature value group
28
Calculated deviation amount group
10
First model group
First model_1
First model_2
...
First model_n
11
Second model group
Second model_1
Second model_2
...
Second model_k
25
Scanning unit

FIG. 2

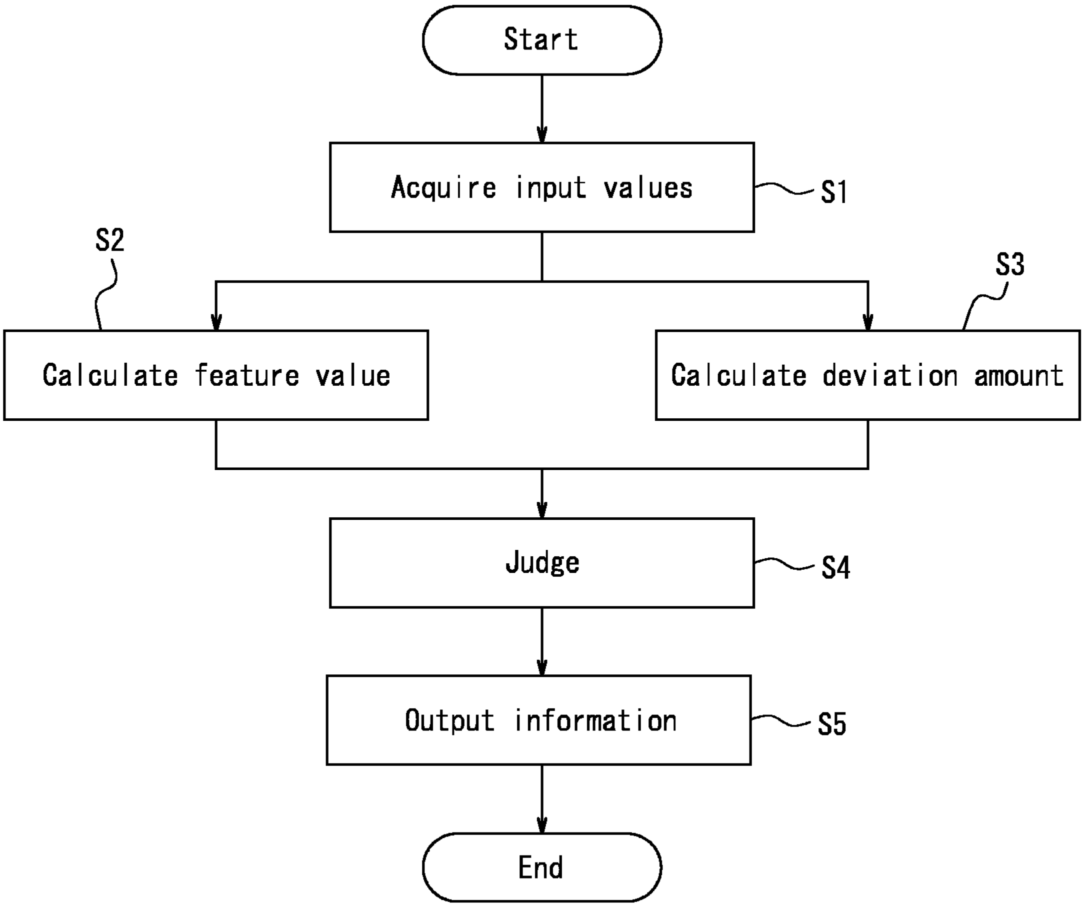
Start
Acquire input values
S1
S2
S3
Calculate feature value
Calculate deviation amount
Judge
S4
Output information
S5
End

FIG. 3

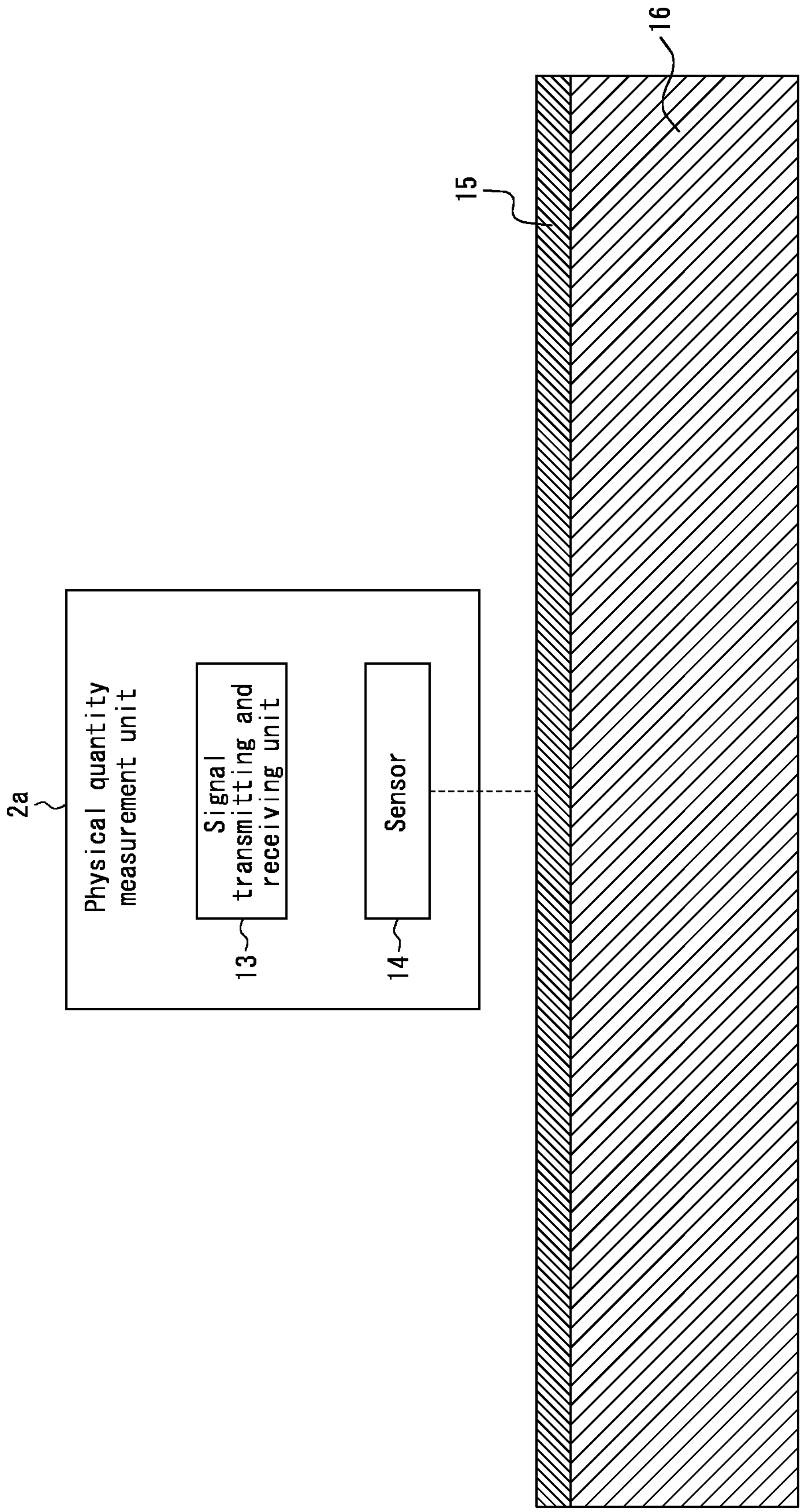
2a
Physical quantity measurement unit
13
Signal transmitting and receiving unit
14
Sensor
15
16

FIG. 4

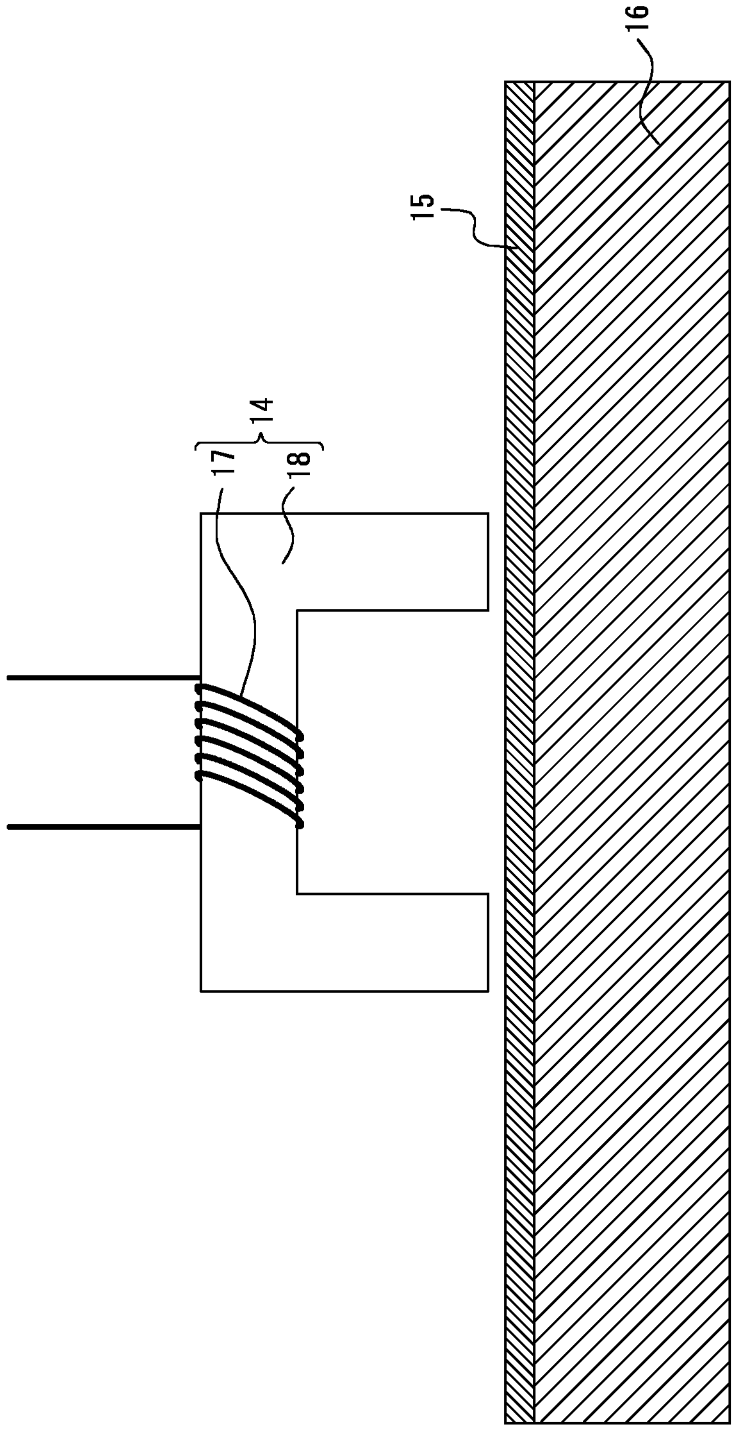

FIG. 5

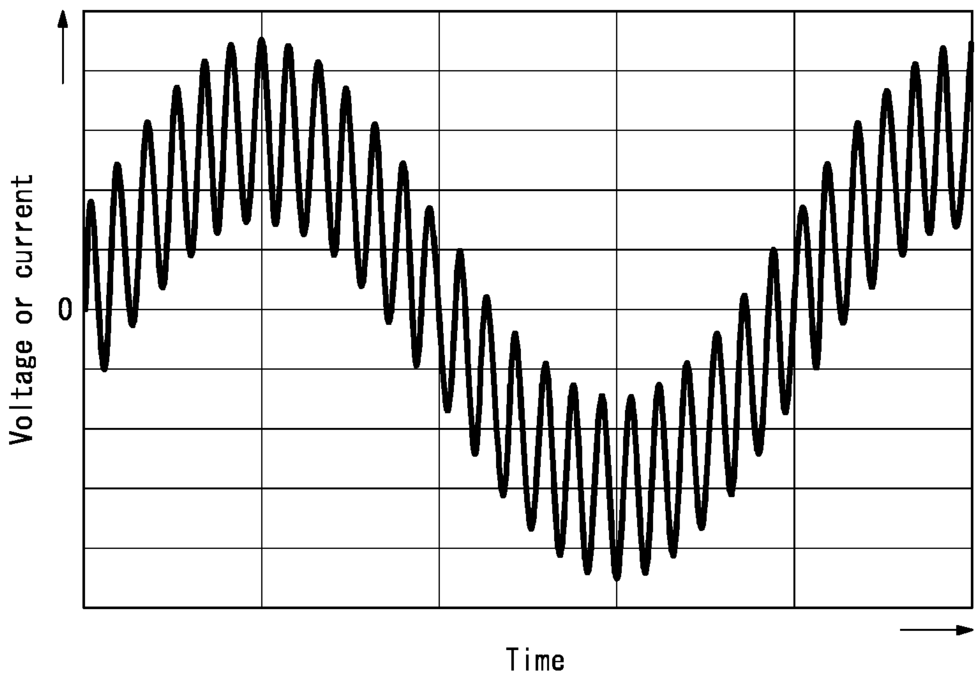

FIG. 6

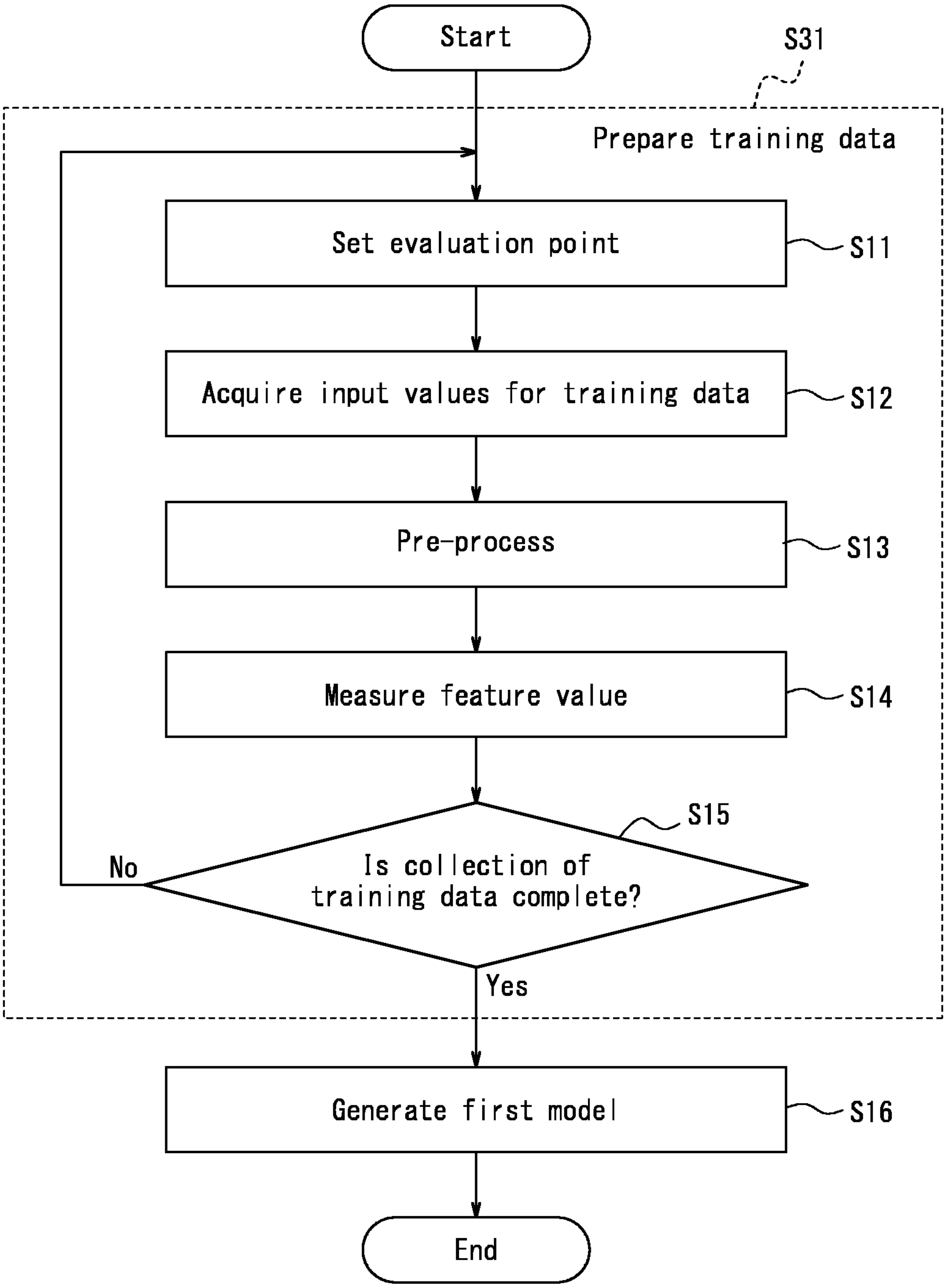
Start
S31
Prepare training data
Set evaluation point
S11
Acquire input values for training data
S12
Pre-process
S13
Measure feature value
S14
S15
Is collection of training data complete?
No
Yes
Generate first model
S16
End

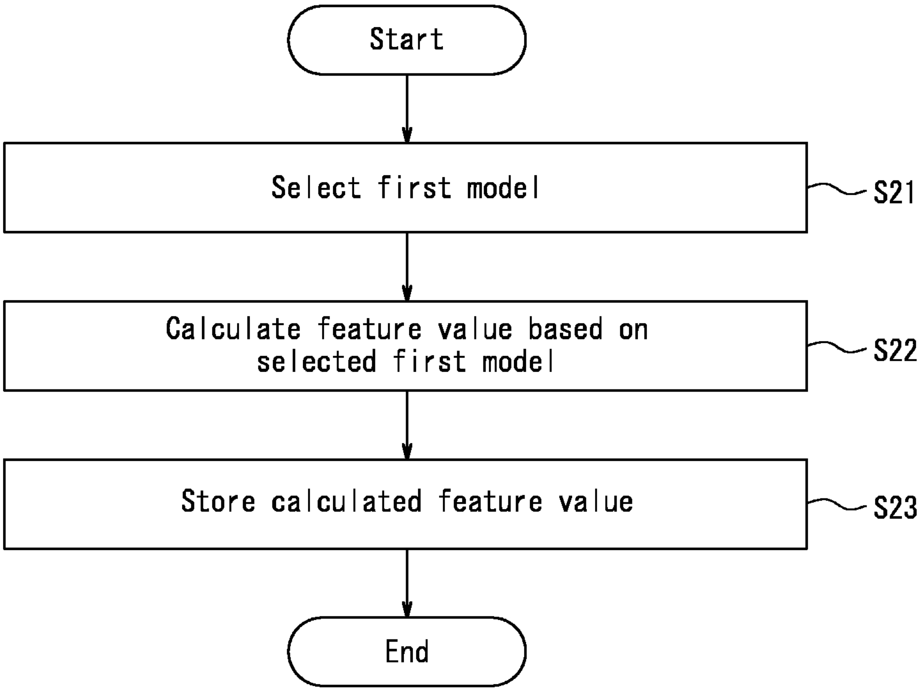
Start
Select first model
S21
Calculate feature value based on selected first model
S22
Store calculated feature value
S23
End

FIG. 7

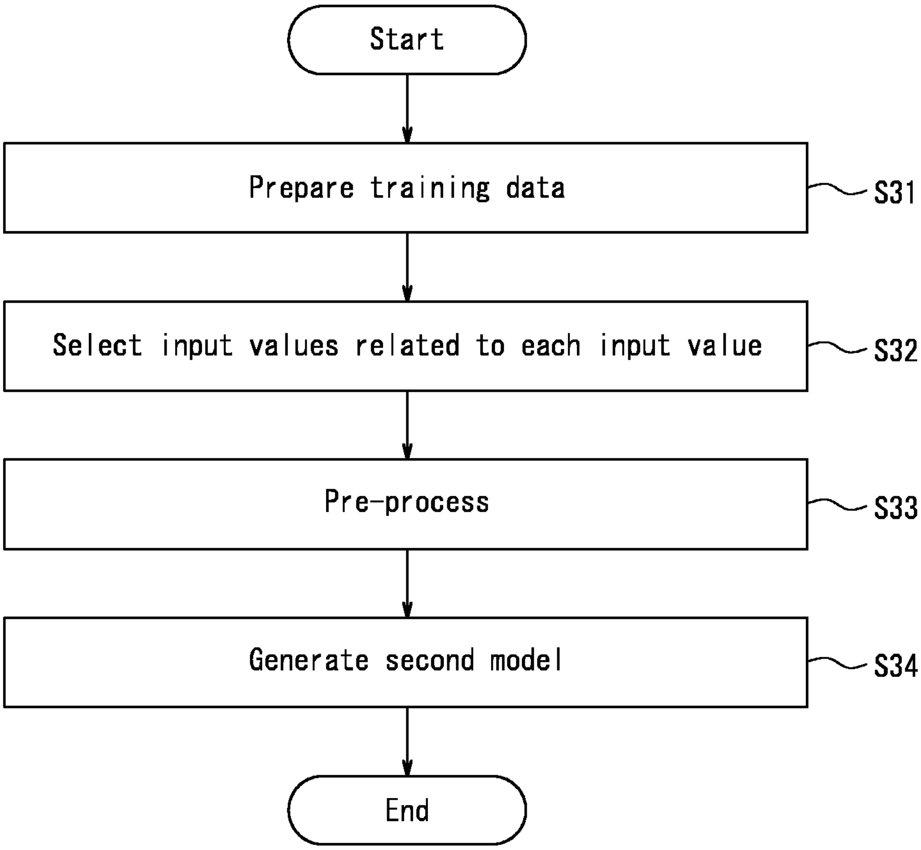
Start
Prepare training data
S31
Select input values related to each input value
S32
Pre-process
S33
Generate second model
S34
End

FIG. 8

FIG. 9

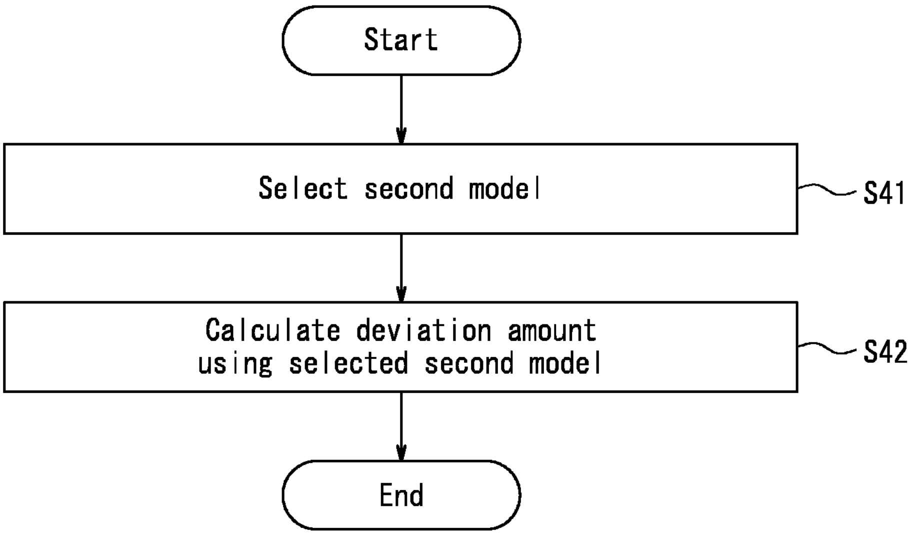
Start
Select second model
S41
Calculate deviation amount using selected second model
S42
End

FIG. 10

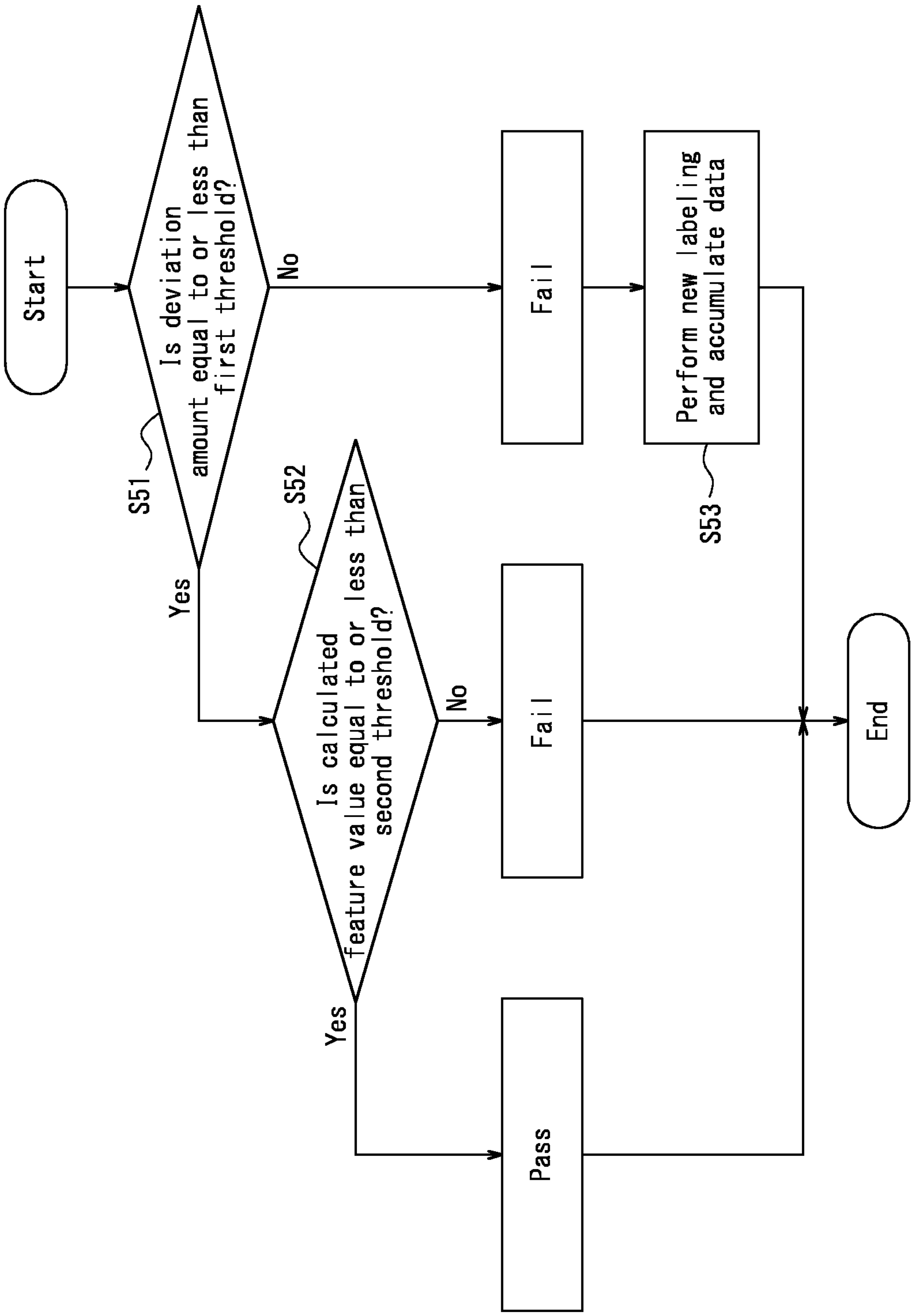
Start
Is deviation amount equal to or less than first threshold?
S51
No
Yes
Fail
Perform new labeling and accumulate data
S53
Is calculated feature value equal to or less than second threshold?
S52
No
Yes
Fail
Pass
End

FIG. 11A

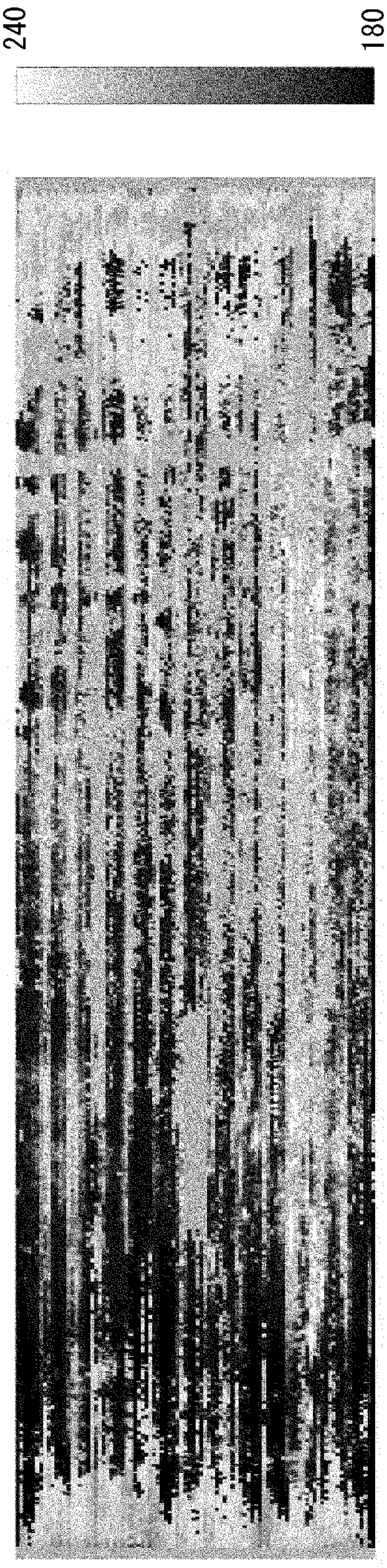

FIG. 11B

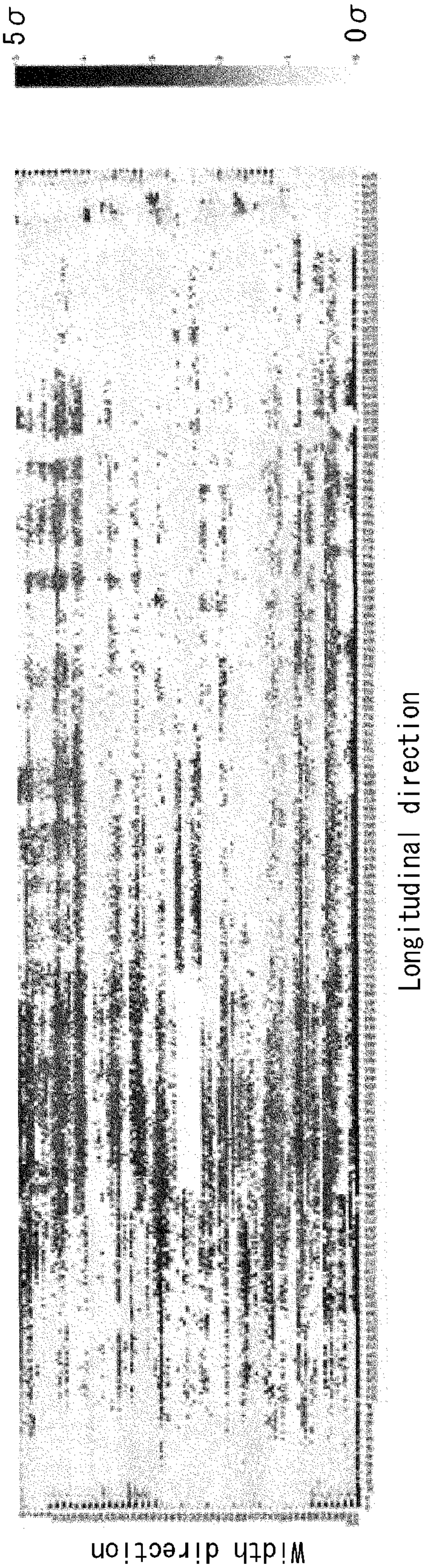

FIG. 11C

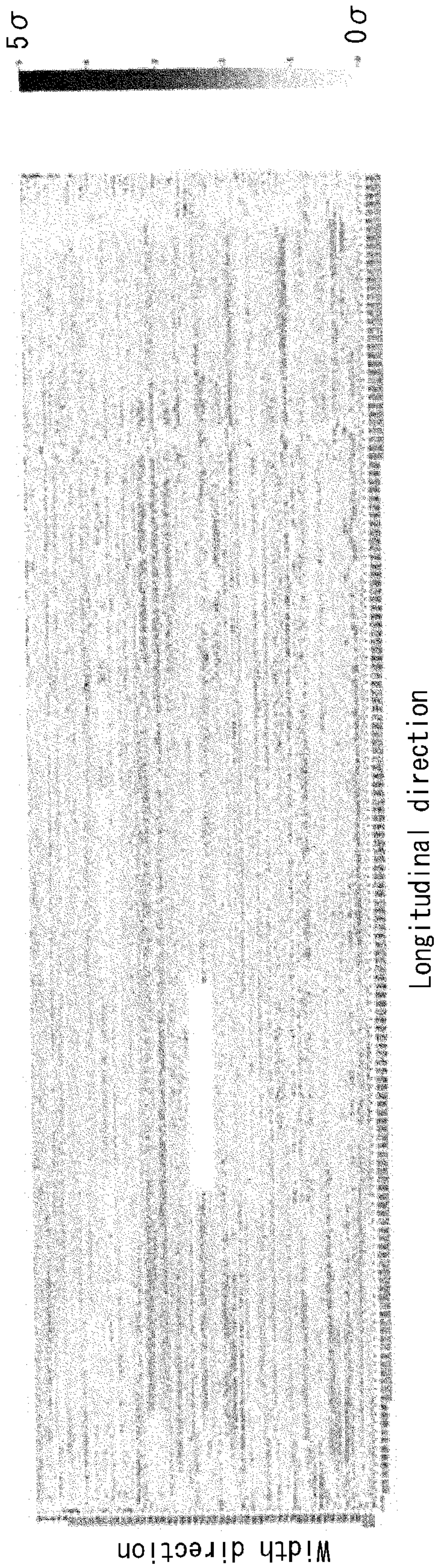

FIG. 12

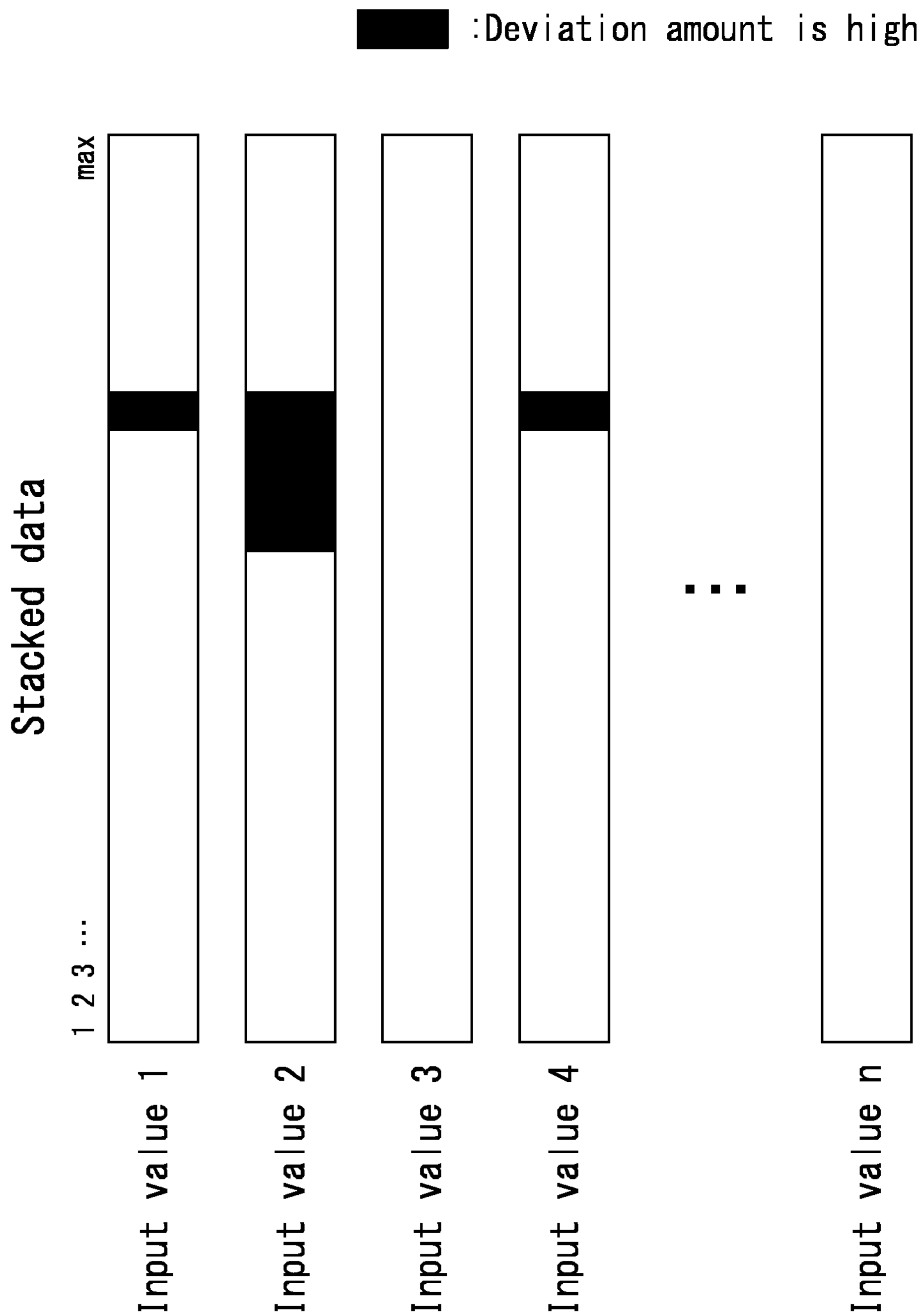
:Deviation amount is high
Stacked data
max
1 2 3 ...
Input value 1
Input value 2
Input value 3
Input value 4
...
Input value n

FIG. 13

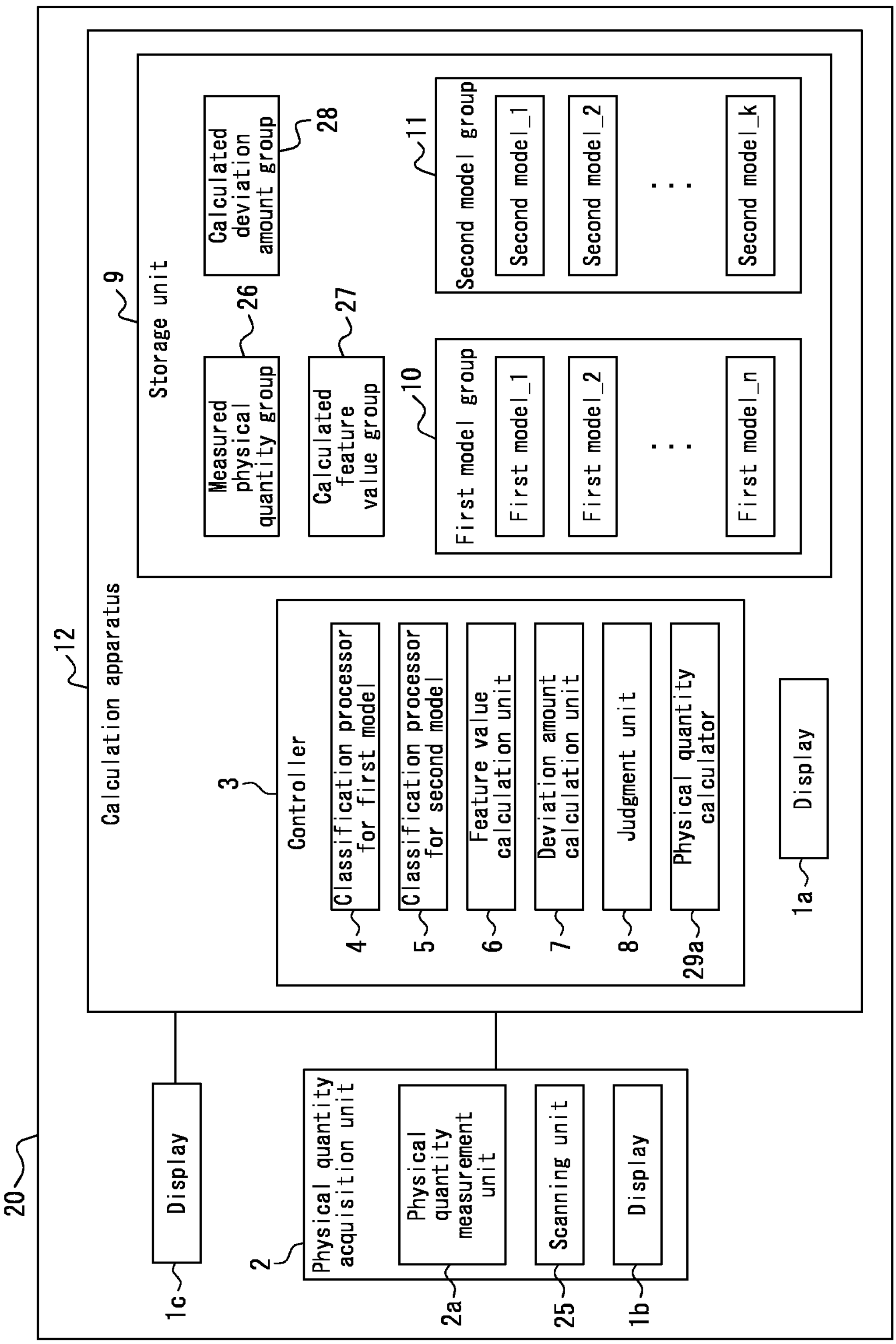
20
Display
1c
Physical quantity acquisition unit
2
Physical quantity measurement unit
2a
Scanning unit
25
Display
1b
Calculation apparatus
12
Controller
3
Classification processor for first model
4
Classification processor for second model
5
Feature value calculation unit
6
Deviation amount calculation unit
7
Judgment unit
8
Physical quantity calculator
29a
Display
1a
Storage unit
9
Measured physical quantity group
26
Calculated feature value group
27
Calculated deviation amount group
28
First model group
10
First model_1
First model_2
First model_n
Second model group
11
Second model_1
Second model_2
Second model_k

FIG. 14

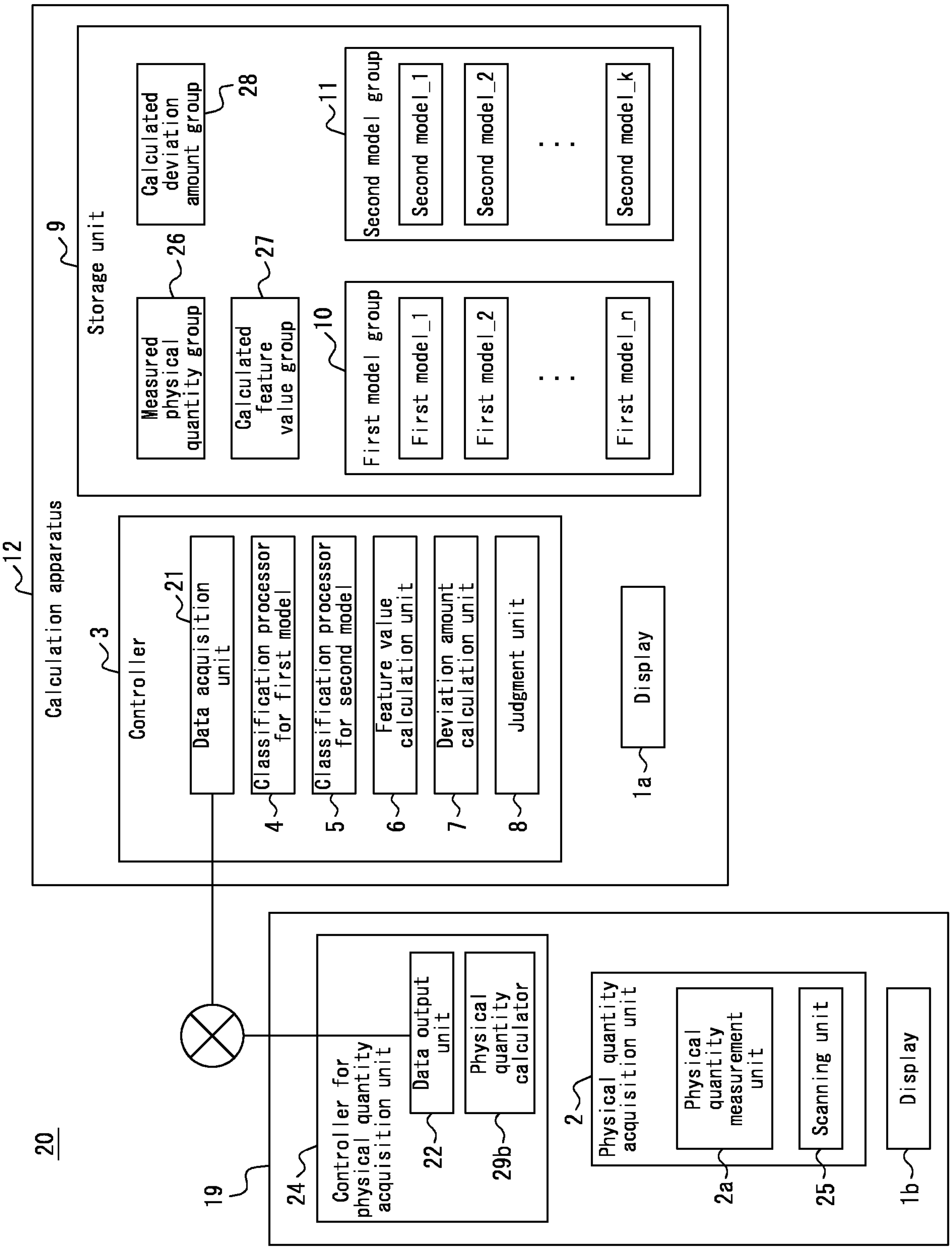
20
12 Calculation apparatus
3 Controller
21 Data acquisition unit
4 Classification processor for first model
5 Classification processor for second model
6 Feature value calculation unit
7 Deviation amount calculation unit
8 Judgment unit
1a Display
9 Storage unit
26 Measured physical quantity group
27 Calculated feature value group
28 Calculated deviation amount group
10 First model group
First model_1
First model_2
...
First model_n
11 Second model group
Second model_1
Second model_2
...
Second model_k
19
24 Controller for physical quantity acquisition unit
22 Data output unit
29b Physical quantity calculator
2 Physical quantity acquisition unit
2a Physical quantity measurement unit
25 Scanning unit
1b Display

FIG. 15

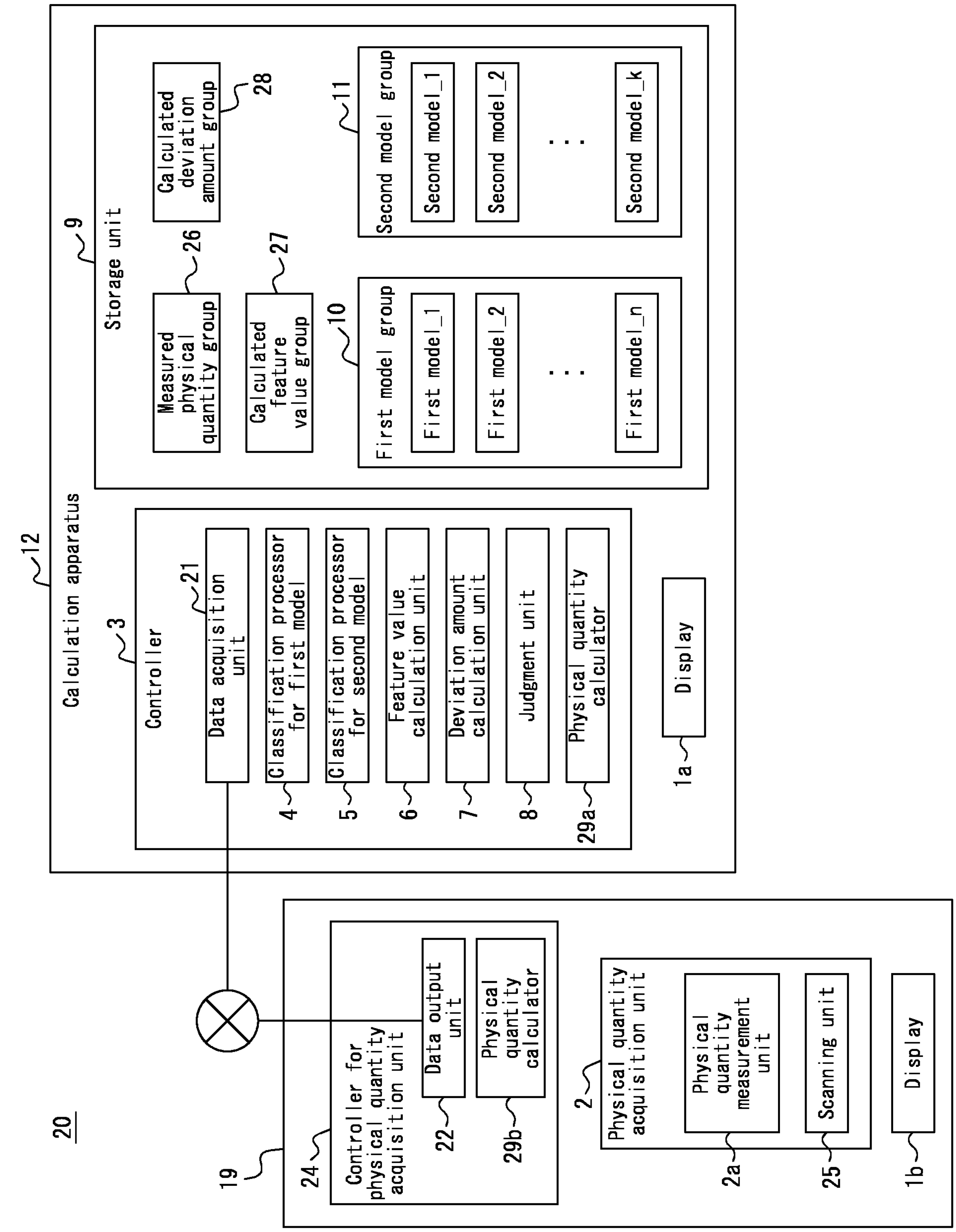
20
12
Calculation apparatus
3
Controller
21
Data acquisition unit
4
Classification processor for first model
5
Classification processor for second model
6
Feature value calculation unit
7
Deviation amount calculation unit
8
Judgment unit
29a
Physical quantity calculator
1a
Display
9
Storage unit
26
Measured physical quantity group
27
Calculated feature value group
28
Calculated deviation amount group
10
First model group
First model_1
First model_2
...
First model_n
11
Second model group
Second model_1
Second model_2
...
Second model_k
19
24
Controller for physical quantity acquisition unit
22
Data output unit
29b
Physical quantity calculator
2
Physical quantity acquisition unit
2a
Physical quantity measurement unit
25
Scanning unit
1b
Display

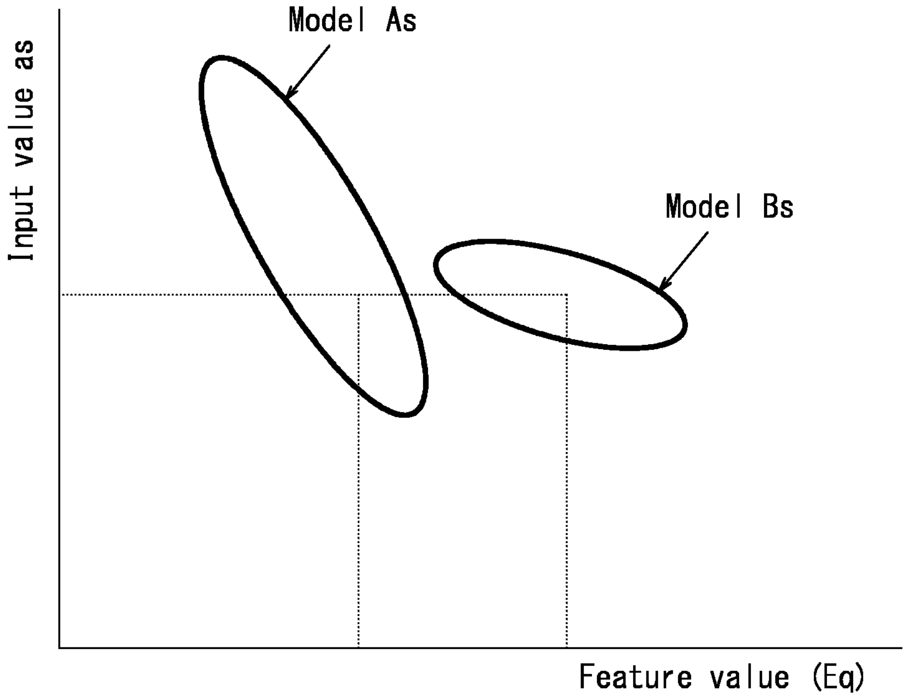


FIG. 16A

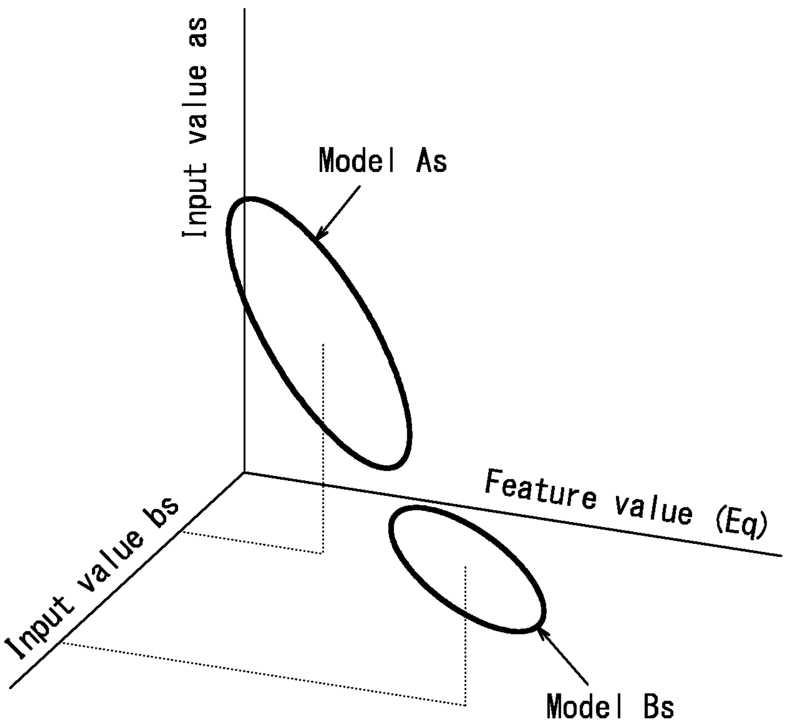


FIG. 16B

FIG. 17

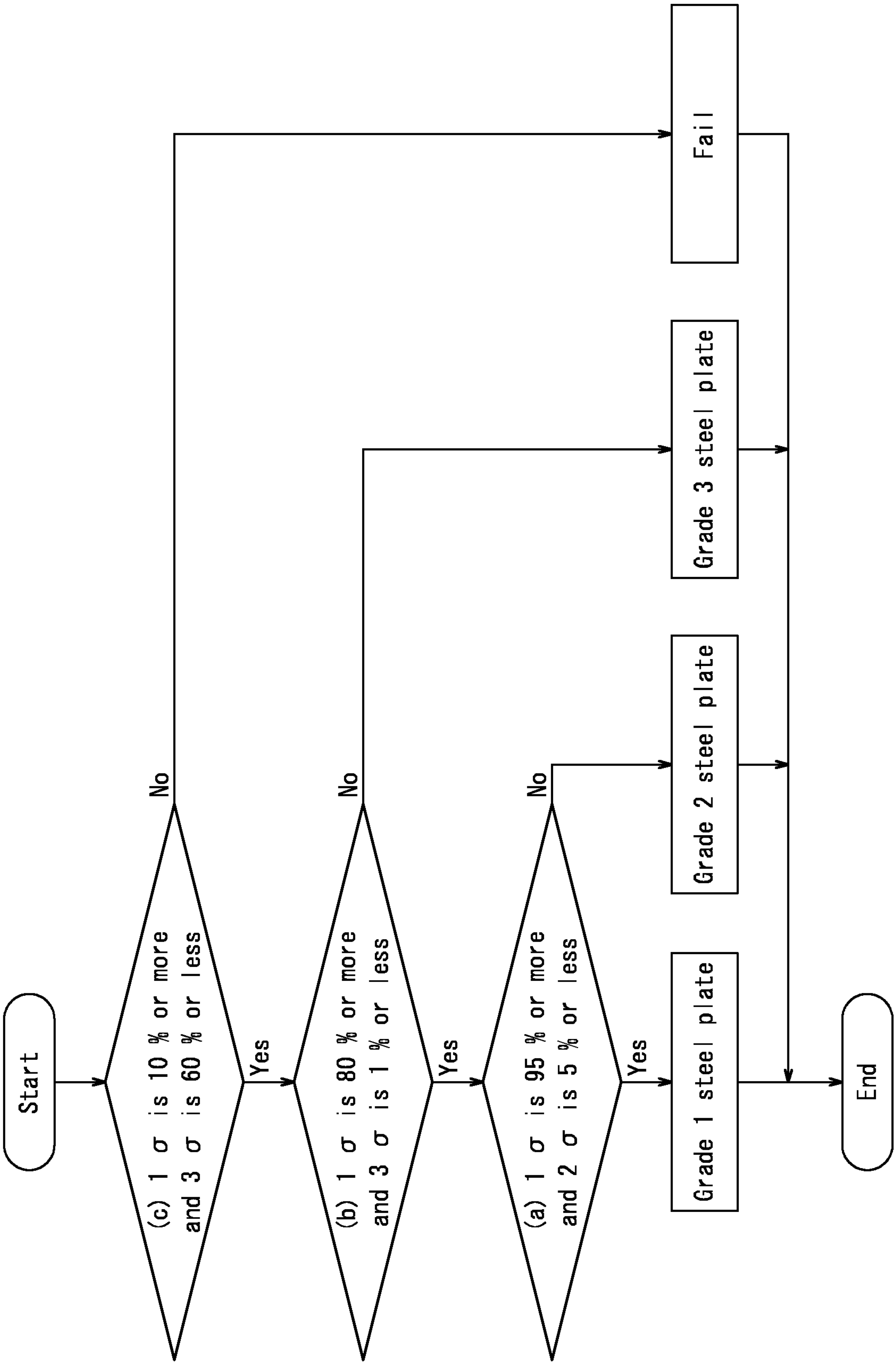
Start
(c) 1 σ is 10 % or more
and 3 σ is 60 % or less
Yes
No
(b) 1 σ is 80 % or more
and 3 σ is 1 % or less
Yes
No
(a) 1 σ is 95 % or more
and 2 σ is 5 % or less
Yes
No
Grade 1 steel plate
Grade 2 steel plate
Grade 3 steel plate
Fail
End

FIG. 18

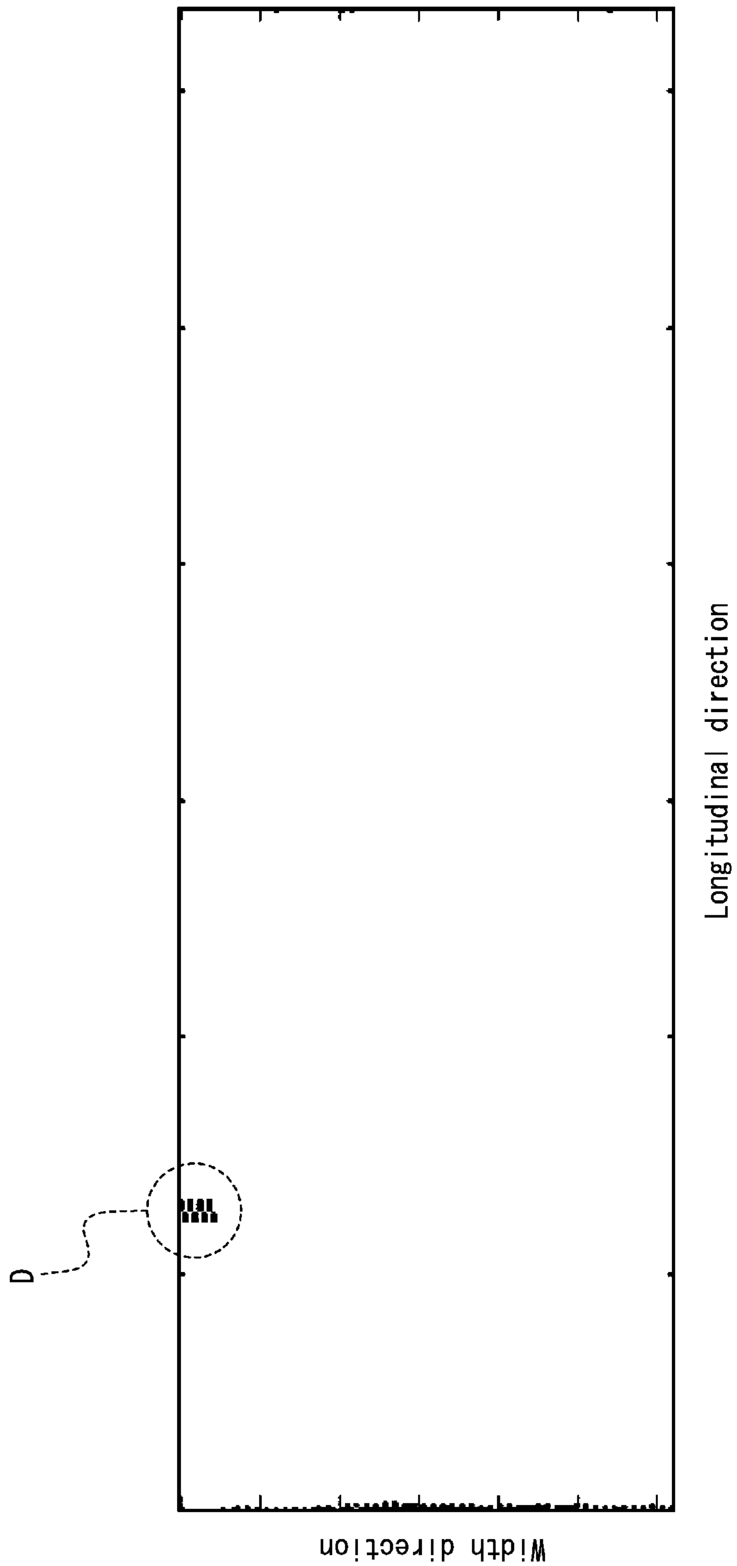

FIG. 19

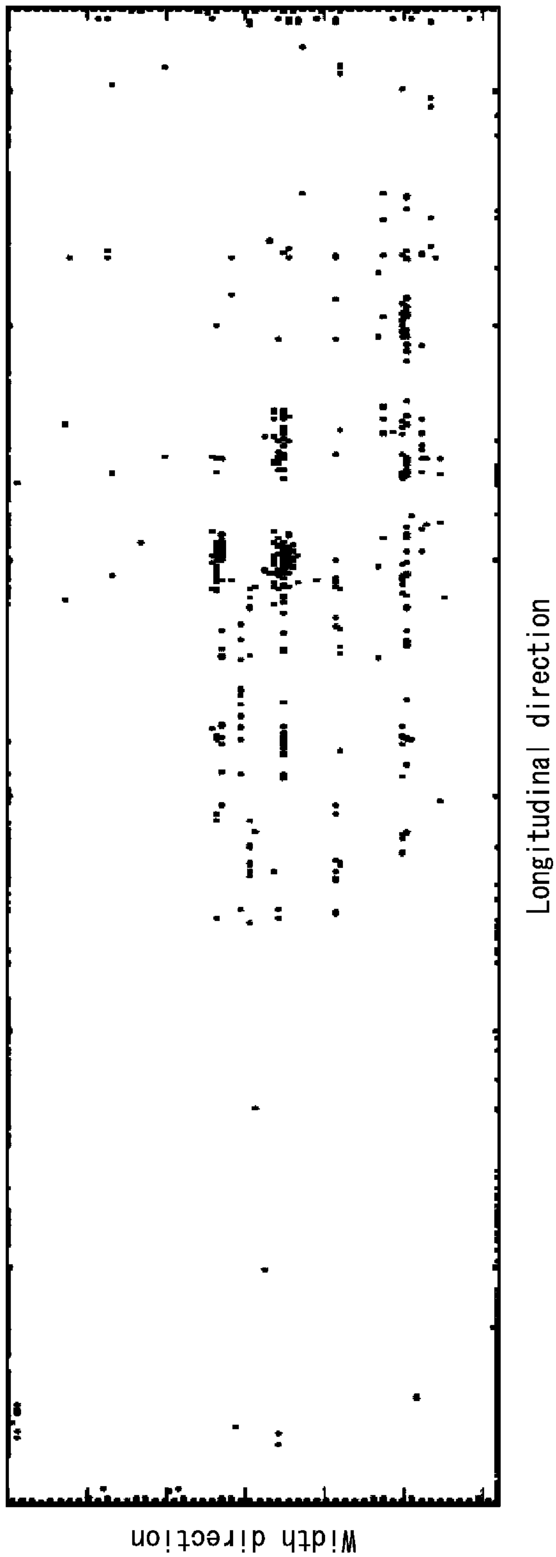

FIG. 20

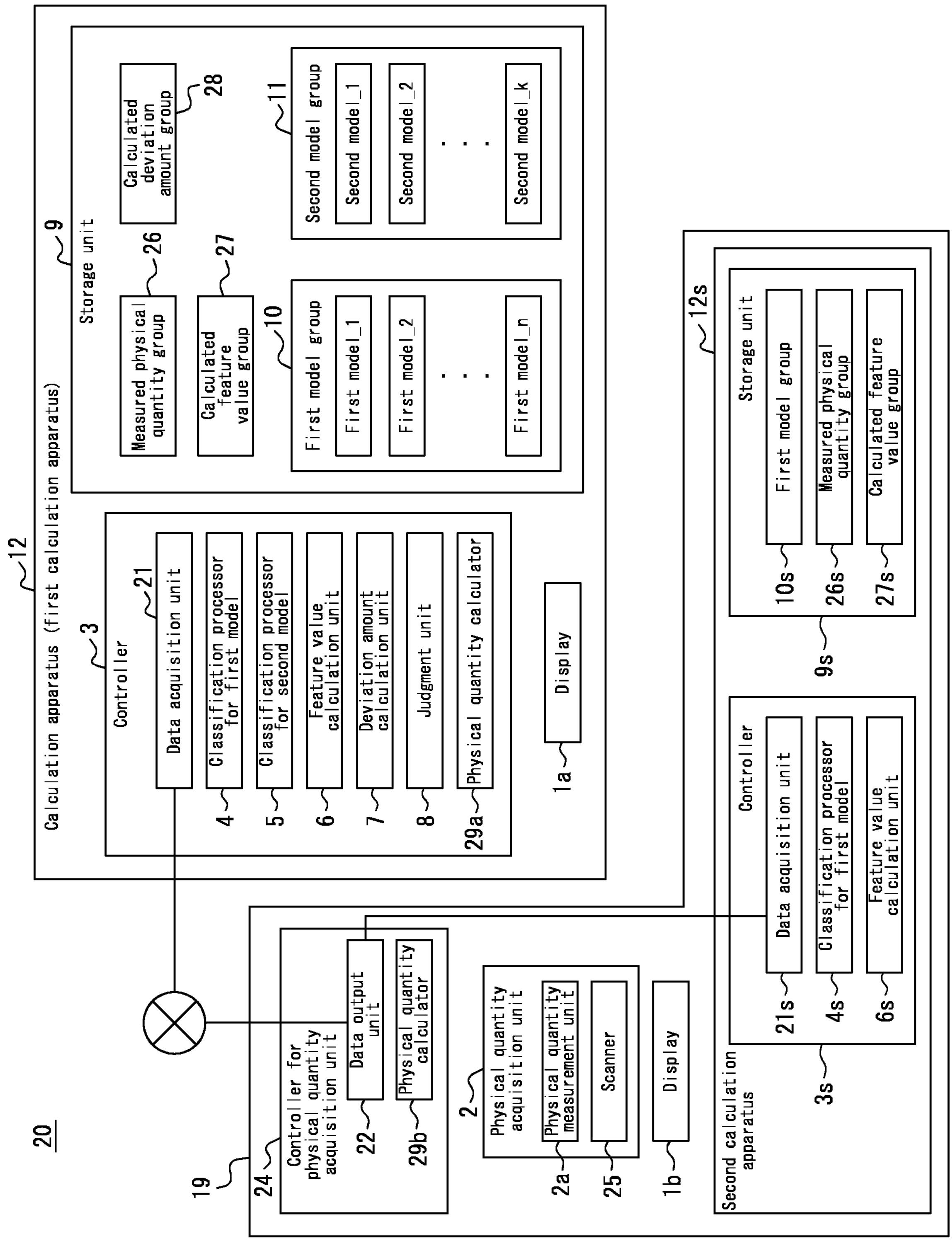
20
Calculation apparatus (first calculation apparatus)
12
Controller
3
Data acquisition unit
21
Classification processor for first model
4
Classification processor for second model
5
Feature value calculation unit
6
Deviation amount calculation unit
7
Judgment unit
8
Physical quantity calculator
29a
Display
1a
Storage unit
9
Measured physical quantity group
26
Calculated feature value group
27
Calculated deviation amount group
28
First model group
10
First model_1
First model_2
First model_n
Second model group
11
Second model_1
Second model_2
Second model_k
19
Controller for physical quantity acquisition unit
24
Data output unit
22
Physical quantity calculator
29b
Physical quantity acquisition unit
2
Physical quantity measurement unit
2a
Scanner
25
Display
1b
Second calculation apparatus
12s
Controller
3s
Data acquisition unit
21s
Classification processor for first model
4s
Feature value calculation unit
6s
Storage unit
9s
First model group
10s
Measured physical quantity group
26s
Calculated feature value group
27s

## INTERNATIONAL SEARCH REPORT

International application No.
**PCT/JP2023/034366**

**A. CLASSIFICATION OF SUBJECT MATTER**

***G06Q 50/04***(2012.01)i
FI: G06Q50/04

According to International Patent Classification (IPC) or to both national classification and IPC

**B. FIELDS SEARCHED**

Minimum documentation searched (classification system followed by classification symbols)

G06Q50/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2020/110796 A1 (SUMCO CORP) 04 June 2020 (2020-06-04)<br>paragraphs [0008]-[0009] | 1-23 |
| Y | JP 2022-139055 A (OMRON TATEISI ELECTRONICS CO) 26 September 2022 (2022-09-26)<br>paragraphs [0001]-[0006], [0015]-[0017] | 1-23 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 November 2023** | **12 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/034366**

| Patent document cited in search report | Publication date (day/month/year) | Patent family member(s) | Publication date (day/month/year) |
|---|---|---|---|
| WO 2020/110796 A1 | 04 June 2020 | US 2022/0034829 A1<br>paragraphs [0013]-[0014]<br>KR 10-2021-0084616 A<br>CN 113366303 A | |
| JP 2022-139055 A | 26 September 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020110796 A1
- JP 2014228300 A
- JP 2021018233 A
- WO 2021256442 A1
- JP 2017187820 A


### Non-patent literature cited in the description


- **WOLTER BERND et al.** Nondestructive Testing with 3MA-An Overview of Principles and Applications. *Applied Sciences*, 2019, vol. 9 (6), 1068